(19) Europäisches Patentamt / European Patent Office / Office européen des brevets

(11) **EP 3 872 044 B1**

(12) **EUROPÄISCHE PATENTSCHRIFT**

(45) Veröffentlichungstag und Bekanntmachung des Hinweises auf die Patenterteilung:
**03.04.2024   Patentblatt 2024/14**

(21) Anmeldenummer: **21159238.1**

(22) Anmeldetag: **25.02.2021**

(51) Internationale Patentklassifikation (IPC):
**C03C 3/087** (2006.01)     **C03C 3/095** (2006.01)
**C03C 3/097** (2006.01)     **C03C 10/12** (2006.01)
**C03C 10/00** (2006.01)

(52) Gemeinsame Patentklassifikation (CPC):
**C03C 3/097; C03C 3/087; C03C 3/095; C03C 10/0027**

(54) **KRISTALLISIERBARES LITHIUMALUMINIUMSILIKAT-GLAS UND DARAUS HERGESTELLTE GLASKERAMIK SOWIE VERFAHREN ZUR HERSTELLUNG DES GLASES UND DER GLASKERAMIK UND VERWENDUNG DER GLASKERAMIK**

CRYSTALLIZABLE LITHIUM ALUMINOSILICATE GLASS AND GLASS CERAMIC PRODUCED THEREFROM AND METHOD FOR PRODUCING GLASS AND GLASS CERAMIC AND USE OF THE GLASS CERAMIC

VERRE DE SILICATE DE LITHIUM-ALUMINIUM CRISTALLISABLE ET VITROCÉRAMIQUE FABRIQUÉE À PARTIR DE CELUI-CI, AINSI QUE PROCÉDÉ DE FABRICATION DU VERRE ET DU VERRE CÉRAMIQUE ET UTILISATION DU VERRE CÉRAMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.02.2020   DE 102020202602**

(43) Veröffentlichungstag der Anmeldung:
**01.09.2021   Patentblatt 2021/35**

(73) Patentinhaber: **SCHOTT AG**
**55122 Mainz (DE)**

(72) Erfinder:
• **Siebers, Friedrich**
  **55283 Nierstein (DE)**
• **Weiss, Evelin**
  **55131 Mainz (DE)**
• **Gabel, Falk**
  **65388 Schlangenbad (DE)**
• **Schmidbauer, Wolfgang**
  **55126 Mainz Finthen (DE)**

(74) Vertreter: **WSL Patentanwälte Partnerschaft mbB**
**Postfach 6145**
**65051 Wiesbaden (DE)**

(56) Entgegenhaltungen:
EP-A1- 2 394 970          DE-B3-102016 208 300
DE-U1-202018 100 558     DE-U1-202018 102 534

**Beschreibung**

Die Erfindung betrifft ein kristallisierbares Lithiumaluminiumsilikat-Glas, das in eine LAS-Glaskeramik umwandelbar ist, gemäß dem Oberbegriff des Anspruchs 1.

Die Erfindung bezieht sich auch auf die daraus hergestellte Glaskeramik, ein Verfahren zu deren Herstellung und die Verwendung einer solchen LAS-Glaskeramik.

LAS-Glaskeramiken finden aufgrund ihrer besonderen Materialeigenschaften, beispielsweise ihres geringen Ausdehnungskoeffizienten verbunden mit hoher Temperaturunterschiedsfestigkeit und Temperaturwechselbeständigkeit, ihrer hohen Festigkeit, ihrer chemischen Beständigkeit und ihrer Transparenz breiten Einsatz. In der Regel wird das thermische Ausdehnungsverhalten so eingestellt, dass die Werkstoffe im Bereich ihrer Anwendungstemperaturen über sehr niedrige Ausdehnung, meist von $\alpha_{20/700} < 0 \pm 1{,}5 \cdot 10^{-6}$/K verfügen. Anforderungen für den Einsatz bei hohen Temperaturen beinhalten, dass die Glaskeramiken die geforderten Eigenschaften (wie z.B. thermische Ausdehnung, Transmission, Temperaturbelastbarkeit) während ihrer Lebensdauer beibehalten. Hinsichtlich Temperaturbelastbarkeit ist die wenn auch geringe Schrumpfung der Glaskeramik (compaction) bei hohen Temperaturen die kritische Größe. Da die Glaskeramikartikel im Einsatz meist ungleichmäßig durchwärmt werden, bauen sich sonst mit der Zeit durch die lokal unterschiedlich starke Schrumpfung Spannungen im Artikel auf.

Verbreitete Anwendungen der LAS-Glaskeramiken sind Brandschutzverglasungen, Kochgeschirr, transparente Kaminsichtscheiben, Ofensichtscheiben sowie als Kochflächen. Bei der Anwendung als Kochflächen werden die transparenten Glaskeramikplatten entweder mit Farboxiden eingefärbt oder auf der Unterseite mit einer blickdichten meist farbigen Beschichtung versehen, um die Durchsicht auf die technischen Einbauten zu verhindern und die farbliche Anmutung bereitzustellen. Aussparungen in der Unterseitenbeschichtung ermöglichen das Anbringen von farbigen und weißen Displayanzeigen, meist Leuchtdioden oder Bildschirmen.

Für das Aussehen und die optischen Eigenschaften von Glaskeramiken sind Transmission und Streuung wichtige Eigenschaften.

Eine Klasse solcher Glaskeramiken sind die transparenten, nicht eingefärbten Glaskeramiken, bei deren Herstellung keine färbenden Verbindungen zugegeben werden. Bei der anderen Klasse, den transparenten eingefärbten Glaskeramiken, wird zur Einfärbung im Volumen meist $V_2O_5$ zugesetzt, um die Helligkeit zu verringern und ein schwarzes Erscheinungsbild zu erreichen. Dies ist für Kochflächen mit schwarzem Erscheinungsbild typisch.

Bei den transparenten, nicht eingefärbten Glaskeramiken ist hohe Transparenz, das bedeutet hohe Helligkeit und eine geringe Farbe gewünscht. Beides bedeutet geringe Absorption, da die Absorptionsbanden je nach Lage im visuell sichtbaren Spektrum sowohl die Helligkeit erniedrigen als auch die Farbe erhöhen. Deshalb beträgt die Helligkeit solcher Glaskeramiken bei einer Dicke von 4 mm in der Regel mehr als 80 %.

In der Literatur finden sich für die Helligkeit auch die Bezeichnungen Lichttransmission oder integrale Transmission.

Transparente, nicht eingefärbte Glaskeramiken weisen allerdings durch die Keimbildner $TiO_2$ und fallweise $SnO_2$ sowie die in den Gemengerohstoffen vorkommenden Verunreinigungen, insbesondere Eisenverunreinigungen, eine geringe Farbe auf. Diese ist unerwünscht und wird durch technische Maßnahmen minimiert.

Ein weiteres wesentliches Merkmal der LAS-Glaskeramiken ist die Streuung, die durch die Größe der Kristalle, deren Doppelbrechung und den Unterschied der Brechzahlen von Kristallen und Restglas bestimmt wird. In der Regel ist eine geringe Streuung erwünscht, damit die Durchsicht nicht verfälscht wird und die Anzeigen klar und deutlich sichtbar sind. In besonderen Anwendungsfällen ist auch eine gesteuerte Streuung gewünscht, um zum Beispiel ein transluzentes weißes Erscheinungsbild zu erzeugen.

Die Helligkeit oder Lichttransmission wird beschrieben durch den Helligkeitswert Y (brightness) gemäß dem CIE-Normfarbsystem oder den L* Wert im CIELAB Farbsystem. Die deutsche Umsetzung der internationalen CIE-Norm ist in der DIN 5033 festgelegt. Das CIELAB Farbmodell ist in der DIN EN ISO 11664-4 "Colorimetry -- Part 4: CIE 1976 L*a*b* Colour space" genormt.

Die dafür erforderlichen spektralphotometrischen Messungen erfolgen im Rahmen der Erfindung an polierten Proben in einem Spektralbereich zwischen 380 und 780 nm. Aus den gemessenen spektralen Werten in dem Bereich, der das sichtbare Lichtspektrum repräsentiert, wird die Lichttransmission mit Wahl von Normlichtart und Beobachterwinkel für die vorliegende Dicke berechnet.

Es hat sich bei Glaskeramiken eingebürgert als Maß für die Farbe die Größe c* (Buntheit) aus dem CIELAB Farbsystem mit den Koordinaten L*, a*, b* heranzuziehen, gemäß der Berechnung:

$$c* = \sqrt{\left(a*\right)^2 + \left(b*\right)^2}$$

Die Koordinaten des CIELAB Farbsystems lassen sich in bekannter Weise aus den Farbkoordinaten und der Helligkeit Y des CIE Farbsystems berechnen. Die Bestimmung des c*- Wertes der Proben erfolgt aus den durchgeführten spektralphotometrischen Messungen der Transmission mit den gewählten Parametern für Normlichtart und Beobachterwinkel.

Die Streuung der Glaskeramiken wird durch Messung der Trübung (engl. haze) bestimmt. Trübung ist nach ASTM D1003-13 der prozentuale Anteil durchgelassenen Lichts, der vom eingestrahlten Lichtbündel im Mittel um mehr als 2,5° abweicht.

Die großtechnische Herstellung transparenter Glaskeramiken erfolgt in mehreren Stufen. Zunächst wird das kristallisierbare Ausgangsglas aus einem Gemisch aus Scherben und pulverförmigen Gemengerohstoffen geschmolzen und geläutert. Die Glasschmelze erreicht dabei Temperaturen von 1550 °C bis maximal 1750 °C, meist bis zu 1700 °C. Fallweise wird auch eine Hochtemperaturläuterung oberhalb 1750 °C, üblicherweise bei Temperaturen um 1900 °C eingesetzt. Für transparente Glaskeramiken sind Arsen- und Antimonoxid bei konventionellen Läutertemperaturen unter 1700 °C hinsichtlich guter Blasenqualitäten technisch und wirtschaftlich bewährte Läutermittel. Arsenoxid ist für die Transparenz (hohe Helligkeit und geringe Farbe) der Glaskeramik besonders vorteilhaft. Auch wenn diese Läutermittel fest im Glasgerüst eingebunden sind, so sind sie doch unter Sicherheits- und Umweltschutzaspekten nachteilig. So müssen bei der Rohstoffgewinnung, der Rohstoffaufbereitung und wegen des Verdampfens aus der Schmelze bei der Glasherstellung besondere Vorsichtsmaßnahmen ergriffen werden. Es gibt deswegen zahlreiche Entwicklungsanstrengungen, diese Stoffe zu ersetzen, die aber auf technische und wirtschaftliche Nachteile stoßen.

Nach dem Einschmelzen und Läutern erfährt das Glas üblicherweise eine Heißformgebung durch Gießen, Pressen, Walzen oder Floaten. Für viele Anwendungen werden die Glaskeramiken in flacher Form benötigt, beispielsweise in Form von Scheiben. Das Walzen und Floaten wird zur Herstellung der Platten eingesetzt. Für die wirtschaftliche Herstellung dieser LAS-Gläser sind eine niedrige Schmelztemperatur und eine niedrige Verarbeitungstemperatur $V_A$ bei der Heißformgebung gewünscht. Weiterhin darf das Glas bei der Formgebung keine Entglasung zeigen, das heißt, es dürfen sich keine größeren Kristalle oberhalb von etwa 5 $\mu$m bilden, die in den Glaskeramik-Artikeln die Festigkeit erniedrigen oder visuell störend sind. Da die Formgebung in der Nähe der Verarbeitungstemperatur $V_A$ (Viskosität $10^4$ dPas) des Glases stattfindet, muss gewährleistet sein, dass die obere Entglasungstemperatur der Schmelze in der Nähe und bevorzugt unter der Verarbeitungstemperatur liegt, um die Bildung größerer Kristalle zu vermeiden. Der bei der Formgebung über Walzen kritische Bereich ist der Kontakt der Glasschmelze mit der Ziehdüse aus Edelmetall (üblicherweise aus einer Pt/Rh-Legierung), bevor das Glas durch die Walzen geformt und abgekühlt wird. Beim Floaten ist es der Glaskontakt mit der spout lip und der vordere Bereich des Floatbades im Kontakt mit dem flüssigen Sn, in dem das Glas eine hohe Kristallwachstumsgeschwindigkeit besitzt.

Das kristallisierbare LAS-Glas wird in einem anschließenden Temperaturprozess durch gesteuerte Kristallisation (Keramisierung) in die Glaskeramik umgewandelt. Diese Keramisierung erfolgt in einem zweistufigen Temperaturprozess, bei dem zunächst durch Keimbildung bei einer Temperatur zwischen 680 °C und 800 °C Keime, üblicherweise aus $ZrO_2/TiO_2$-Mischkristallen, erzeugt werden. Auch $SnO_2$ ist an der Keimbildung beteiligt. Die Hochquarz-Mischkristalle wachsen bei erhöhter Temperatur auf diesen Keimen auf. Bei der maximalen Herstelltemperatur um etwa 900 °C wird das Gefüge der Glaskeramik homogenisiert und die optischen, physikalischen und chemischen Eigenschaften eingestellt. Für eine wirtschaftliche Herstellung sind kurze Keramisierungszeiten vorteilhaft.

Die weitere Umwandlung in Keatit-Mischkristalle erfolgt bei Temperaturerhöhung in einem Temperaturbereich von ca. 950 °C bis 1250 °C. Mit der Umwandlung erhöht sich der thermische Ausdehnungskoeffizient der Glaskeramik, und durch weiteres Kristallwachstum und damit einhergehende Lichtstreuung wandelt sich das transparente in transluzentes bis opakes Aussehen um.

Für die Hochquarz-Mischkristalle finden sich in der Literatur auch die Synonyme "β-Quarz" oder "β-Eukryptit" und für die Keatit-Mischkristalle "β-Spodumen" als Bezeichnung für die Kristallphasen.

Zunehmend wird als Ersatz für Arsen- und Antimonoxid das umweltfreundliche Läutermittel $SnO_2$ allein oder in Kombination mit einem oder mehreren Läuterzusätzen wie Halogeniden (F, Cl, Br), $CeO_2$ $MnO_2$, $Fe_2O_3$, Schwefelverbindungen propagiert.

Die Verwendung von $SnO_2$ ist jedoch mit Nachteilen verbunden. $SnO_2$ selbst ist als Läutermittel technisch weniger effektiv und benötigt höhere Temperaturen zur Abgabe des läuteraktiven Sauerstoffs. Hohe Konzentrationen an $SnO_2$ in der Größenordnung des eingesetzten $As_2O_3$ von ca. 1 Gew.-% sind wegen der Entglasung von Sn-haltigen Kristallen bei der Heißformgebung nachteilig. Der für transparente Glaskeramiken zweite wesentliche Nachteil bei der Substitution von Arsen- durch Zinnoxid als Läutermittel besteht darin, dass $SnO_2$ zu einer zusätzlichen Absorption führt und die Farbe erhöht. Die Absorption beruht hauptsächlich auf Farbkomplexen mit dem Keimbildner $TiO_2$. Bei höheren Läutertemperaturen verstärkt sich die Absorption, da diese mit dem höheren Anteil an $Sn^{2+}$ zunimmt. Die Sn/Ti-Farbkomplexe färben stärker als die bekannten Fe/Ti-Farbkomplexe und dieser Nachteil hat bei transparenten Glaskeramiken bisher die Substitution des Läutermittels Arsenoxid durch Zinnoxid erschwert. Die Fe/Ti-Farbkomplexe führen zu einer rotbraunen, die Sn/Ti-Farbkomplexe zu einer gelbbraunen Farbe.

Der Absorptionsmechanismus beider Farbkomplexe beruht mutmaßlich auf elektronischen Übergängen (charge transfer) zwischen den beiden benachbarten polyvalenten Kationen.

Die Bildung der genannten charge-transfer-Farbkomplexe findet maßgeblich bei der Kristallisation statt. Um die Konzentrationen der Farbkomplexe zu verringern, ist es vorteilhaft, die Keimbildungs- und Kristallisationszeiten zu verkürzen. Dem steht entgegen, dass die Verkürzung der Keimbildungszeit zu verstärkter Lichtstreuung und die Verkürzung der Kristallisationszeit zu Unebenheiten des Artikels führen.

In den technischen Gemengerohstoffen für die Schmelzen sind weitere färbende Elemente wie Cr, Mn, Ni, V und besonders Fe als Verunreinigungen enthalten. Das Fe färbt außer über die Fe/Ti-Farbkomplexe auch ionisch als $Fe^{2+}$ oder $Fe^{3+}$. Wegen der hohen Kosten eisenarmer Rohstoffe ist es jedoch unwirtschaftlich, den $Fe_2O_3$-Gehalt auf Werte unter ca. 50 ppm zu verringern.

Bei einigen etablierten Anwendungen von Glaskeramiken finden zunehmend hitzebeständige Spezialgläser, wie Alumino- oder Borosilikatgläser Verwendung. Durch technische Zusatzmaßnahmen wie eine Luftkühlung bei Kaminscheiben oder elektronische Temperaturbegrenzung bei induktionsbeheizten Kochflächen können die Einsatztemperaturen erniedrigt und fallweise ein Einsatz für diese Spezialgläser ermöglicht werden. Gegenüber diesen Gläsern stellt die Farbe von transparenten Glaskeramiken einen wesentlichen Nachteil dar. Es besteht daher ein Bedarf, transparente Glaskeramiken mit geringer Farbe zu entwickeln.

Die Ansätze, den für die Farbkomplexe in Glaskeramiken mit verantwortlichen Keimbildner $TiO_2$ zu vermeiden (WO 2008/065167 A1) oder zu begrenzen (WO 2008/065166 A1), haben bisher nicht zu einer technischen Umsetzung geführt. Die erforderlichen höheren Gehalte der alternativen Keimbildner $ZrO_2$ und/oder $SnO_2$ führen zu Nachteilen bei der Schmelze und Formgebung, wie höhere Schmelz- und Formgebungstemperaturen sowie unzureichende Entglasungsfestigkeit bei der Formgebung.

Die Schrift WO 2013/124373 A1 beschreibt die physikalische Entfärbung von transparenten Glaskeramiken mit Hochquarz-Mischkristallen als Hauptkristallphase, die bis auf unvermeidliche Rohstoffverunreinigungen frei von Arsen und Antimon sind, durch Zusätze von 0,005 - 0,15 Gew.-% $Nd_2O_3$. Das Prinzip des physikalischen Entfärbens beruht darauf, dass die vorhandenen Absorptionsbanden durch komplementäre Absorptionsbanden des Entfärbemittels neutralisiert werden. Dies führt naturgemäß zu stärkerer Absorption des Lichts und erniedrigt damit die Helligkeit. Um günstige Fertigungsbedingungen, d.h. niedrige Schmelz- und niedrige Formgebungstemperaturen zu erreichen, enthalten die Beispielgläser dieser Schrift hohe Gehalte der viskositätsabsenkenden Komponente MgO von 0,44 bis 0,93 Gew.-%. Neben den hohen MgO-Gehalten sind die vergleichsweise hohen $SnO_2$-Gehalte der Beispielglaskeramiken für die Farbe c* nachteilig.

Die Schrift WO 2013/171288 A1 offenbart transparente, farbarme und nicht streuende Glaskeramik-Artikel mit Hochquarz-Mischkristallen, die Glaskeramiken sowie die Vorläufergläser. Die Zusammensetzungen der LAS-Glaskeramiken sind bis auf unvermeidliche Spurengehalte frei von Arsen-, Antimonoxid und Selten-Erdoxiden wie $Nd_2O_3$. Für eine zufriedenstellende Läuterung enthalten die Gläser höhere $SnO_2$-Gehalte. Die erfindungsgemäßen Beispielgläser enthalten zur Verbesserung der Farbe kein MgO, so dass es zu Nachteilen hinsichtlich hoher Schmelz- und vor allem erhöhter Verarbeitungstemperaturen $V_A$ kommt. Dies bedeutet für die Formgebung mit Walzen aufgrund der höheren Temperaturen ein enges Prozessfenster und geringere Standzeiten der Anlage.

Die Schrift WO 2016/038319 A offenbart transparente, farblose und nicht-lichtstreuende Glaskeramikplatten, die Kristalle vom Hochquarz-Mischkristalltyp enthalten, deren chemische Zusammensetzung keine Oxide des As, Sb und Nd enthält mit einer ausgewählten Zusammensetzung. Der Mindestgehalt des Läutermittels $SnO_2$ wird bei höheren Werten gewählt, um eine ausreichende Blasenqualität sicherzustellen. Nachteilig ist der offenbarte Zusammensetzungsbereich für die Farbe. Der Farbwert b* ist nicht besser als 6,4 offenbart.

Die DE 20 2018 102 534 U1 und die EP 2 394 970 A1 betreffen jeweils eingefärbte, transparente Glaskeramiken.

Bei der Entwicklung besteht daher Bedarf, ein ganzes Bündel von gegenläufigen Forderungen an Glas und Glaskeramik, wie günstige Fertigungseigenschaften ohne Nachteile bei der Produktqualität der Glaskeramik, wie insbesondere Farbe, Helligkeit sowie geringe Streuung bei kurzen Keramisierungszeiten zu vereinbaren.

Der Erfindung liegt die Aufgabe zugrunde, ein kristallisierbares Lithiumaluminiumsilikat-Glas zu finden,

- das günstige Fertigungseigenschaften für eine wirtschaftliche Herstellung besitzt,
- wobei die daraus hergestellte transparente Glaskeramik eine geringe Farbe, eine hohe Helligkeit und eine geringe Streuung aufweisen soll, wobei kurze Keramisierungszeiten angestrebt werden.

Diese Aufgabe wird mit einem kristallisierbaren Lithiumaluminiumsilikat-Glas mit den Merkmalen des Patentanspruchs 1 und mit einer daraus hergestellten Glaskeramik mit den Merkmalen des Anspruchs 18 gelöst.

Es ist auch Aufgabe der Erfindung, ein Verfahren zur Herstellung des Glases und der Glaskeramik und deren Verwendung zu finden. Diese Aufgaben werden durch die weiteren unabhängigen Ansprüche gelöst.

Das erfindungsgemäße kristallisierbare Lithiumaluminiumsilikat-Glas und die aus dem Glas herstellbare bzw. hergestellte erfindungsgemäße Glaskeramik weist folgende Komponenten (in Gew.-% auf Oxidbasis) auf:

$Li_2O$ 3 - 5
$Al_2O_3$ 19 - 24

SiO$_2$ 62 - 70
TiO$_2$ >1,6 - 2,8
ZrO$_2$ 1 - 2,5
MgO 0,01 - < 0,5
SnO$_2$ 0,01 - < 0,15

mit der Bedingung (dabei beide in Gew.-%):

$$0,005 < MgO \times SnO_2 < 0,06 \text{ (Bedingung B1a)},$$

wobei das Glas bis auf unvermeidliche Verunreinigungen keine weiteren färbenden Verbindungen enthält, wie Ce, Cr, Ni, Cu, V, Mo, W und/oder S, die zu einer gelben, orangen oder roten Einfärbung führen.

Die Zahlenwerte in Bedingung B1a haben die Dimension (Gew.-%)$^2$.

Li$_2$O, Al$_2$O$_3$ und SiO$_2$

Die Oxide Li$_2$O, Al$_2$O$_3$ und SiO$_2$ sind bzw. werden in den angegebenen Grenzen notwendige Bestandteile der Hochquarz- und/oder Keatit-Mischkristallphasen.

Für das kristallisierbare Glas und die daraus hergestellte Glaskeramik soll der Gehalt Li$_2$O 3 bis 5,0 Gew.-% betragen. Der Mindestgehalt ist erforderlich, um die gewünschte niedrige Verarbeitungstemperatur des Glases zu erreichen. Es hat sich gezeigt, dass es bei höheren Gehalten als 5 Gew.-% schwierig ist, die gewünschte thermische Nullausdehnung der Glaskeramik zu erreichen. Höhere Gehalte als 5 Gew.-% sind auch hinsichtlich der gewünschten niedrigen Farbe c* der Glaskeramik nachteilig. Bevorzugt beträgt der Li$_2$O-Gehalt weniger als 4,5 Gew.-%, weiter bevorzugt weniger als 4,2 Gew.-% und besonders bevorzugt weniger als 4 Gew.-%. Der Mindestgehalt beträgt bevorzugt 3,2 und besonders bevorzugt 3,4 Gew.-%.

Ein bevorzugter Bereich ist 3 Gew.-% bis < 4,5 Gew.-%.

Der Gehalt an Al$_2$O$_3$ beträgt 19 - 24 Gew.-%. Höhere Gehalte als 24 Gew.-% sind nachteilig wegen der Neigung zu Entglasung von Mullit bei der Formgebung. Weiter hat sich gezeigt, dass mit höheren Gehalten die Streuung bei kurzen Keramisierungszeiten zunimmt. Bevorzugt ist daher ein Anteil von höchstens 23 Gew.-%. Der Mindestgehalt beträgt 19 Gew.-%, weil Al$_2$O$_3$ für eine niedrige Verarbeitungstemperatur und eine geringe Farbe c* der Glaskeramik von Vorteil ist. Der Al$_2$O$_3$-Mindestgehalt beträgt bevorzugt mindestens 20 Gew.-%.

Der Gehalt der Hauptkomponente SiO$_2$ soll mindestens 62 Gew.-% betragen, weil dies für die geforderten Eigenschaften der Glaskeramik, wie z.B. niedrige thermische Ausdehnung und chemische Beständigkeit vorteilhaft ist. Darüber hinaus wird die Streuung bei kurzen Keramisierungszeiten verringert. Besonders vorteilhaft ist ein Mindestgehalt von 64 Gew.-%. Der SiO$_2$-Gehalt soll maximal 70 Gew.-% betragen, weil diese Komponente die Verarbeitungstemperatur des Glases und die Schmelztemperatur erhöht. Bevorzugt beträgt der SiO$_2$-Gehalt maximal 68 Gew.-%.

Keimbildner TiO$_2$, ZrO$_2$

Die Komponente TiO$_2$ ist als wirksamer Keimbildner unverzichtbar für die Transparenz der Glaskeramik. Sie führt zu hohen Keimbildungsraten und damit auch bei kurzen Keramisierungszeiten zu ausreichender Bildung von Keimen und damit kleiner mittlerer Kristallitgröße. Damit ist es möglich, auch bei kurzen Keramisierungszeiten Glaskeramiken ohne visuell störende Streuung zu erhalten.

Höhere TiO$_2$-Gehalte sind aber aufgrund der Bildung von Fe/Ti-Farbkomplexen und Sn/Ti-Farbkomplexen kritisch. Daher sollte der TiO$_2$-Anteil mehr als 1,6 Gew.-% und bis zu 2,8 Gew.-% betragen. Bevorzugt ist ein minimaler TiO$_2$-Gehalt von 1,8 Gew.-%. Dieser Mindestgehalt ist für die Verringerung der Keramisierungszeiten vorteilhaft, um Streuung zu vermeiden. Besonders bevorzugt ist ein TiO$_2$-Gehalt von mehr als 2 Gew.-%.

Bevorzugt sind höchstens 2,6 Gew.-% TiO$_2$ enthalten, um die Farbwirkung zu begrenzen.

Als weiterer Keimbildner ist ZrO$_2$ vorgesehen. Der ZrO$_2$-Gehalt beträgt 1 bis 2,5 Gew.-%. Bevorzugt ist der ZrO$_2$-Gehalt auf weniger als 2,2 Gew.-% und weiter bevorzugt auf weniger als 2 Gew.-% begrenzt, da höhere Gehalte das Einschmelzverhalten des Gemenges bei der Glasherstellung verschlechtern und es bei der Formgebung zur Entglasung durch Bildung von Zr-haltigen Kristallen kommen kann. Da die Komponente hilft, höhere Gehalte des alternativen Keimbildner TiO$_2$ zu vermeiden, ist sie für die Bereitstellung einer Glaskeramik mit niedriger Farbe c* von Vorteil. Der ZrO$_2$-Mindestgehalt beträgt bevorzugt 1,6 Gew.-%.

SnO$_2$

Der Auswahl des SnO$_2$-Gehaltes kommt im Rahmen der Erfindung besondere Bedeutung zu, insbesondere ist die Komponente kritisch für die Farbe der Glaskeramik wegen der Bildung der Sn/Ti- Farbspezies bei der Kristallisation.

Eine neue besondere Aufmerksamkeit gilt den Fertigungseigenschaften bei der gebräuchlichen Formgebung über wassergekühlte Walzen. Die großtechnischen Versuche mit SnO$_2$-geläuterten LAS-Gläsern mit 0,18 Gew.-% SnO$_2$, die in der WO 2013/124373 A1 offenbart sind, haben gezeigt, dass sich bei der Formgebung ein Sn-haltiger Walzbelag aufbaut. Aufgrund der Wirkung von Zinnoxid als Keimbildner induziert dieser Walzbelag im Kontakt mit der Glasschmelze zunehmend Oberflächenkristalle auf dem sich abkühlenden Glasband. Diese sind visuell auffällig und können die Festigkeit erniedrigen. Die Entfernung des Walzbelags ist mit Produktionsausfall verbunden. Mit der Erfindung wird dieser wirtschaftliche Nachteil durch den Walzbelag vermindert.

Auch bei der Heißverformung der glasigen Platten über einem Brenner können aufgrund der Wiedererwärmung durch eingedrückte Partikel des Walzbelags Kristalle in der Biegenaht induziert werden, die bei der Keramisierung wachsen und visuell stören. Verwendung finden solche verformten Glaskeramikartikel zum Beispiel als winklig gebogene Kaminscheiben.

Zur Vermeidung dieser Nachteile wird der SnO$_2$-Gehalt gegenüber dem Stand der Technik begrenzt und beträgt weniger als 0,15 Gew.-%, bevorzugt weniger als 0,12 Gew.-%, bevorzugt weniger als 0,10 Gew.-%, weiter bevorzugt weniger als 0,08 Gew.-% und besonders bevorzugt weniger als 0,05 Gew.-%. Mit der Verringerung des SnO$_2$-Gehaltes nehmen Farbe und Walzbelag kontinuierlich ab. Eine deutliche Verbesserung in der Bildung von Oberflächenkristallen bei der Formgebung zeigt sich unterhalb von 0,10 Gew.-% SnO$_2$.

Als Untergrenze für SnO$_2$ ist ein Mindestgehalt von 0,01 Gew.-% erforderlich. Insbesondere wenn die Läutermittel Arsen- oder Antimonoxid nicht eingesetzt werden, wirkt das polyvalente Zinnoxid der Blasenbildung (reboil) an Edelmetalleinbauten in der Schmelzwanne entgegen. Auch schon bei geringen Gehalten wirkt das SnO$_2$ als Läutermittel und stellt in Kombination mit technischen Maßnahmen an der Schmelzwanne die geforderte Blasenqualität sicher. Bevorzugt enthält das Glas und die daraus hergestellte Glaskeramik mindestens 0,03 Gew.-% und besonders bevorzugt mindestens 0,04 Gew.-% SnO$_2$.

Ein unter Würdigung aller Aspekte bezüglich geringer Farbe und wirtschaftlicher Fertigungseigenschaften besonders bevorzugter Bereich ist 0,03 - < 0,10 Gew.-% SnO$_2$.

MgO

Eine weitere Schlüsselkomponente für das Erreichen der gewünschten Eigenschaften der Glaskeramik ist der MgO-Gehalt. Die Komponente MgO ist sowohl Bestandteil der Mischkristalle als auch der Restglasphase und hat daher starken Einfluss auf viele Eigenschaften. Die Komponente erniedrigt die Schmelz- und Verarbeitungstemperatur des Glases und begünstigt daher die wirtschaftliche Herstellung. Der MgO-Gehalt beträgt mindestens 0,01 Gew.-%, bevorzugt mindestens 0,05 Gew.-%, weiter bevorzugt mindestens 0,1 Gew.-% und besonders bevorzugt mindestens 0,15 Gew.-%. In der Glaskeramik erhöht die Komponente die thermische Ausdehnung und führt zu einer besonders nachteiligen Verstärkung der Farbe. Dies wird der Begünstigung der Ausbildung von Fe/Ti- und Sn/Ti-Farbspezies zugeschrieben.

Der MgO-Gehalt soll weniger als 0,5 Gew.-%, bevorzugt höchstens 0,4 Gew.-% und besonders bevorzugt höchstens 0,35 Gew.-% betragen. In einem bevorzugten MgO-Wertebereich von 0,1 Gew.-% bis 0,4 Gew.-% lassen sich die Anforderungen an geringe Farbe der Glaskeramik und niedriger Verarbeitungstemperatur besonders gut miteinander verbinden. Die thermische Ausdehnung der Glaskeramik lässt sich dabei in der Nähe der Nullausdehnung einstellen.

MgO $\times$ SnO$_2$

Dem Produkt der Komponenten MgO $\times$ SnO$_2$ kommt eine entscheidende Bedeutung zu, um geringe Farbe, Läuterbarkeit und niedrige Schmelz- und Formgebungstemperaturen zu vereinbaren. So können bei wirtschaftlicher Herstellung die Farbe c* weiter verringert und die Helligkeit Y der Glaskeramik weiter verbessert werden und der Nachteil gegenüber Spezialgläsern mit hohen Werten der Helligkeit und niedriger Farbe kann vermindert werden.

Das erfindungsgemäße Glas besitzt ein Produkt der Komponenten MgO $\times$ SnO$_2$ (beide in Gew.-%) von weniger 0,06, bevorzugt weniger als 0,05, bevorzugt weniger als 0,04, weiter bevorzugt weniger als 0,03 und besonders bevorzugt weniger als 0,025. Das Produkt der Komponenten soll mehr als 0,005, bevorzugt mehr als 0,01, weiter bevorzugt mehr als 0,012 und besonders bevorzugt mehr als 0,015 betragen.

Dies ist eine wesentliche Bedingung, um die gewünschten günstigen Fertigungseigenschaften des Glases mit geringer Farbe, hoher Helligkeit zu vereinbaren.

Vorteilhafterweise gilt für das Produkt der Komponenten:

$$0{,}01 < MgO \times SnO_2 < 0{,}05 \text{ (Bedingung B1b).}$$

In Versuchsreihen mit variierten MgO- und SnO-Gehalten wurde herausgefunden, dass der MgO Gehalt die Absorption durch den Sn/Ti-Farbkomplex in charakteristischer Weise beeinflusst. Die optische Auswertung der Spektren zeigte, dass die Sn/Ti-Absorptionsbande im Blauen nicht nur in der Intensität beeinflusst wird, sondern auch in ihrer Lage im sichtbaren Spektrum. Durch die erniedrigten MgO-Gehalte wird die Absorptionsbande in der Lage ihres Maximums in Richtung des nicht sichtbaren UV-Bereiches verschoben. Da hier die Empfindlichkeit des menschlichen Auges geringer ist, führt dies zu der angestrebten Verringerung der Farbe und der Erhöhung der Helligkeit. Wenn die Sn/Ti-Absorptionsbande durch geringe Gehalte an $SnO_2$ in ihrer Intensität verringert ist, ist der Gesamteffekt besonders vorteilhaft. Die erfindungsgemäß geringen Gehalte von MgO und $SnO_2$ im Rahmen der Bedingung B1a, insbesondere im Rahmen der Bedingung B1b, sind daher für die gewünschte Transparenz, hohe Helligkeit und geringe Farbe c* wesentlich. Unter der Transparenz wird hohe Helligkeit Y und geringe Farbe c* verstanden. Bevorzugte Werte sind Y > 83% und c* ≤ 4.

Es wurde ein eng eingegrenzter Zusammensetzungsbereich gefunden, der günstige Fertigungseigenschaften mit geringer Farbe, hoher Lichttransmission und geringer Streuung der LAS-Glaskeramik verknüpft. Insbesondere die geringe Farbe der erfindungsgemäßen transparenten Glaskeramiken kommt den Werten näher, die für temperaturstabile Spezialgläser typisch sind, bei denen die Farbe c* in der Regel kleiner als 1 ist.

Die günstigen Fertigungseigenschaften für eine wirtschaftliche Herstellung beinhalten kostengünstige Gemengerohstoffe, niedrige Schmelz- und Formgebungstemperaturen, Entglasungsfestigkeit und kurze Keramisierungszeiten. Bei den kurzen Keramisierungszeiten wird eine hohe Helligkeit ohne visuell störende Lichtstreuung (Trübung) erreicht.

Weiterhin ist dafür ein gegenüber dem Stand der Technik erhöhtes Verhältnis der Keimbildner $TiO_2/SnO_2$ vorteilhaft. Bevorzugt gilt $18 \leq TiO_2/SnO_2 < 200$ (Bedingung B2). Weiter bevorzugt gilt für das Verhältnis mindestens 20 und besonders bevorzugt mindestens 25. Beide Komponenten erhöhen insbesondere über die Absorption der Sn/Ti-Farbkomplexe die Farbe. Durch die erfindungsgemäßen niedrigen $SnO_2$-Gehalte wird die Konzentration dieser Farbkomplexe verringert und es werden die gewünschte hohe Helligkeit und niedrige Farbe erreicht. Dabei kann der $TiO_2$-Gehalt bei höheren Werten gewählt werden, das Verhältnis nimmt zu. Dadurch sind kurze Keramisierungszeiten ohne störenden Streuung darstellbar, und die Entglasungsfestigkeit wird verbessert. Eine bevorzugte Obergrenze liegt unter 100.

Bevorzugt gilt für die Summe der Keimbildner $TiO_2 + ZrO_2 + SnO_2$ (Bedingung B3) ein Wertebereich von 3,8 bis 4,8 Gew.-%. Der Mindestgehalt ist für eine ausreichend schnelle Keimbildung erforderlich. Bevorzugt beträgt der Mindestgehalt 4 Gew.-% um die Streuung bei schneller Keramisierung weiter zu vermindern. Die Obergrenze von 4,8 Gew.-% ergibt sich aus der Forderung nach Entglasungsfestigkeit.

Alkalien

Die Alkalien $Na_2O$ und $K_2O$ erniedrigen die Schmelztemperatur und die Verarbeitungstemperatur bei der Formgebung des Glases. Das Einschmelzen der schwer löslichen Rohstoffe für $ZrO_2$ und $SiO_2$ wird beschleunigt. Die Gehalte müssen bei beiden auf maximal 1,5 Gew.-% begrenzt werden, weil diese Komponenten nicht in die Kristallphasen eingebaut werden, sondern in der Restglasphase der Glaskeramik verbleiben. Zu hohe Gehalte beeinträchtigen das Kristallisationsverhalten bei der Umwandlung des kristallisierbaren Ausgangsglases in die Glaskeramik und wirken sich ungünstig auf die Zeit-/Temperaturbelastbarkeit der Glaskeramik aus.

Bevorzugt ist der $Na_2O$-Gehalt 0 Gew.-% oder > 0 Gew.-%, und besonders bevorzugt enthält das Glas mindestens 0,1 Gew.-% $Na_2O$. Der maximale Anteil beträgt vorzugsweise 1,5 Gew.-%, insbesondere 1 Gew.-%. Vorzugsweise beträgt der $Na_2O$-Anteil 0,1 Gew.-% - 1,5 Gew.-%.

Bevorzugt ist der $K_2O$-Gehalt 0 Gew.-% oder > 0 Gew.-%, und besonders bevorzugt enthält das Glas mindestens 0,1 Gew.-% $K_2O$. Der maximale Anteil beträgt vorzugsweise 1,5 Gew.-%, insbesondere 1 Gew.-%. Vorzugsweise beträgt der $K_2O$-Anteil 0,1 Gew.-% - 1,5 Gew.-%.

In einer bevorzugten Ausführung gilt $0{,}2$ Gew.-% $\leq Na_2O + K_2O \leq 1{,}5$ Gew.-% (Bedingung B4a). Die Summe der Alkalien $Na_2O + K_2O$ beträgt weiter bevorzugt maximal 1,2 Gew.-%. Die Summe der Alkalien $Na_2O + K_2O$ beträgt besonders bevorzugt mindestens 0,4 Gew.-%, um die Schmelzbarkeit weiter zu verbessern und die Verarbeitungstemperatur zu erniedrigen. Besonders bevorzugt gilt $0{,}2$ Gew.-% $\leq Na_2O + K_2O \leq 1{,}2$ Gew.-% (Bedingung B4b).

Es hat sich gezeigt, dass die Komponente $Na_2O$ für die Erniedrigung der Schmelztemperatur günstiger als $K_2O$ ist. Deshalb ist es bevorzugt, dass der $Na_2O$-Gehalt höher ist als der $K_2O$-Gehalt (beide in Gew.-%). Besonders vorteilhaft ist es, wenn gilt: $1 < Na_2O/K_2O \leq 10$ (Bedingung B5). Vorzugsweise liegt die Untergrenze für das Verhältnis $Na_2O/K_2O$ bei 2. Eine bevorzugte Obergrenze des Verhältnisses $Na_2O/K_2O$ ist weniger als 8.

Erdalkalien

Wie die Alkalien Na$_2$O und K$_2$O werden auch die Erdalkalien CaO, SrO und BaO nicht in die Mischkristallphasen eingebaut, sondern verbleiben in der Restglasphase der Glaskeramik. Sie sind vorteilhaft, um die Schmelz- und Verarbeitungstemperaturen abzusenken. Zu hohe Gehalte beeinträchtigen das Keimbildungs- und Kristallisationsverhalten bei der Umwandlung des kristallisierbaren Glases in die Glaskeramik und wirken sich ungünstig auf die Zeit-/Temperaturbelastbarkeit der Glaskeramik aus.

Die Komponente CaO hat sich als vorteilhaft erwiesen, um die Verarbeitungstemperatur V$_A$ abzusenken und die Entglasungsfestigkeit zu verbessern. Sie führt allerdings zu einer erhöhten Farbe und Streuung bei kurzen Keramisierungszeiten. CaO ist in Gehalten von maximal 2 Gew.-%, bevorzugt maximal 1 Gew.-% enthalten. Besonders bevorzugt ist die Obergrenze für den CaO-Gehalt von weniger als 0,8 Gew.-%, um die Streuung bei kurzen Keramisierungszeiten zu minimieren. Bevorzugt gilt CaO gleich 0 Gew.-% oder > 0 Gew.-%, besonders bevorzugt ≥ 0,05 Gew.-%, weiter bevorzugt mindestens 0,1 Gew.-% und besonders bevorzugt mindestens 0,3 Gew.-%. Ein bevorzugter Bereich ist 0,05 Gew.-% bis 2 Gew.-%.

Der BaO-Gehalt beträgt vorzugsweise bis 4 Gew.-%. Der SrO-Gehalt beträgt vorzugsweise bis 2 Gew.-%. Der BaO-Gehalt beträgt bevorzugt bis 2,5 Gew.-%. Der SrO-Gehalt beträgt bevorzugt bis 1,5 Gew.-%. Besonders bevorzugt ist ein BaO-Gehalt von 0 Gew.-% oder > 0 Gew.-%, wenigstens 0,2 Gew.-%.

Ein bevorzugter Bereich für BaO ist 0,2 Gew.-% bis 2,5 Gew.-%.

Der SrO-Anteil beträgt vorzugsweise 0 Gew.-%, besonders bevorzugt > 0 Gew.-%, insbesondere ≥ 0,01 Gew.-%.

Ein bevorzugter Bereich für SrO ist 0,01 Gew.-% bis 2 Gew.-%.

Um die Schmelz- und Verarbeitungstemperaturen abzusenken, ist es bevorzugt, wenn die Summe der SrO- und BaO-Gehalte 0,5 - 2,5 Gew.-% (Bedingung B6) beträgt. Höhere Gehalte sind für die Zeit-/Temperaturbelastbarkeit der Glaskeramik nachteilig.

Die Alkalien Na$_2$O, K$_2$O und die Erdalkalien CaO, SrO, BaO reichern sich außer in der Restglasphase zwischen den Kristallen auch an der Oberfläche der Glaskeramik an. Beim Keramisieren bildet sich eine ca. 50 bis 1000 nm dicke glasige Oberflächenschicht, die nahezu frei ist von Kristallen und die mit diesen Elementen angereichert ist, wobei Li$_2$O abgereichert ist. Diese glasige Oberflächenschicht wirkt sich günstig auf die Säurebeständigkeit der Glaskeramikoberfläche aus. Für ausreichende Dicke der glasigen Schicht von mindestens 50 nm sind die Mindestgehalte beider Klassen von Komponenten, d. h. der Alkalien und der Erdalkalien, erforderlich. Höhere Gehalte als die Obergrenzen können zu höheren Dicken der glasigen Schicht führen, was für die Festigkeit der Glaskeramik nachteilig ist.


ZnO

Die Komponente ZnO ist vorteilhaft für die Erniedrigung der Schmelz- und Verarbeitungstemperatur des Glases und für verminderte Streuung bei kurzen Keramisierungszeiten. ZnO wird in die Mischkristallphasen eingebaut, und ein Teil verbleibt auch in der Restglasphase. Die Komponente führt vergleichbar der Komponente Li$_2$O zu einer Verringerung der thermischen Ausdehnung der Glaskeramik. Der ZnO-Gehalt ist wegen der Verdampfungsneigung aus der Glasschmelze und wegen der geforderten Nullausdehnung der Glaskeramik auf Werte von höchstens 3 Gew.-% begrenzt. Bevorzugt ist ein ZnO-Gehalt von höchstens 2,5 Gew.-% und besonders bevorzugt von höchstens 2,0 Gew.-%. Vorzugsweise gilt ZnO gleich 0 Gew.-% oder > 0 Gew.-%. Bevorzugt ist ein Mindestgehalt von 0,5 und besonders bevorzugt mehr als 1 Gew.-%. Der ZnO-Gehalt soll vorzugsweise 0,5 Gew.-% bis 3 Gew.-% betragen.

Das kristallisierbare Lithiumaluminiumsilikat-Glas enthält ZnO mit einem Anteil von vorzugsweise 0,5 Gew.-% bis 3 Gew.-%.


P$_2$O$_5$

Zur Verbesserung der Schmelzbarkeit und Entglasungsfestigkeit bei der Formgebung können bis zu 4 Gew.-% P$_2$O$_5$ enthalten sein. Höhere Gehalte sind nachteilig für die chemische Beständigkeit. Vorzugsweise gilt für P$_2$O$_5$ 0 Gew.-% oder > 0 Gew.-%. Eine bevorzugte Untergrenze liegt bei 0,01 Gew.-% und besonders bevorzugt bei 0,02 Gew.-%. Eine bevorzugte Obergrenze liegt bei 2 Gew.-% P$_2$O$_5$. Ein bevorzugter Bereich ist 0,01 Gew.-% bis 4 Gew.-%.

Das kristallisierbare Lithiumaluminiumsilikat-Glas enthält P$_2$O$_5$ mit einem Anteil von vorzugsweise 0,01 Gew.-% bis 4 Gew.-%.


B$_2$O$_3$

Auch der Zusatz von bis zu 1 Gew.-% B$_2$O$_3$ verbessert Schmelzbarkeit und Entglasungsfestigkeit, ist aber nachteilig für die Zeit-/Temperaturbelastbarkeit der Glaskeramik. Bevorzugt ist die Glaskeramik technisch frei von B$_2$O$_3$,

das heißt die Gehalte liegen unter 1000 ppm.

$Fe_2O_3$

Wegen der hohen Kosten eisenarmer Gemengerohstoffe ist es unwirtschaftlich, den $Fe_2O_3$-Gehalt des kristallisierbaren Glases auf Werte unter 0,008 Gew.-%, also auf weniger als 80 ppm zu begrenzen. Andererseits erhöht sich mit dem $Fe_2O_3$-Gehalt auch die Konzentration der Fe/Ti-Farbkomplexe in der Glaskeramik. Die Farbe (Buntheit) c* wird erhöht und durch Absorption wird die Helligkeit Y vermindert. Das kristallisierbare Glas und die daraus hergestellte Glaskeramik sollen deswegen höchstens 0,025 Gew.-%, bevorzugt bis zu 0,02 Gew.-% an $Fe_2O_3$ enthalten.

Färbende Verbindungen

Wegen der Verschlechterung von Lichttransmission und Zunahme der Farbe enthält das Glas bis auf unvermeidliche Verunreinigungen keine weiteren färbenden Verbindungen, wie Ce, Cr, Ni, Cu, V, Mo, W und/oder S, die zu einer gelben, orangen oder roten Einfärbung führen. Die Gehalte betragen bevorzugt weniger als 20 ppm. Ein Maximal-Gehalt von 0,1 Gew.-% ist noch tolerierbar.

Läutermittel

Die Läuterung kann durch den Zusatz chemischer Läutermittel wie Arsen-, Antimon- oder Ceroxid und von Läuterzusätzen wie Manganoxid, Sulfat-, Halogenidverbindungen in Gesamtgehalten vorzugsweise bis zu 2,0 Gew.-% unterstützt werden.

In einer bevorzugten Ausführungsform besitzt das kristallisierbare Glas, bzw. die daraus hergestellte LAS-Glaskeramik eine umweltfreundliche Zusammensetzung. Darunter wird verstanden, dass die Zusammensetzung technisch frei ist von Arsen- und Antimonoxid als übliche Läutermittel, das heißt die Gehalte liegen vorzugsweise unter 1000 ppm.

Als Verunreinigung können beide Komponenten in Gehalten von weniger als 0,2 Gew.-%, bevorzugt weniger als 0,1 Gew.-% und besonders bevorzugt weniger als 500 ppm vorliegen. Außer im Ausnahmefall, wenn bei der Schmelze aus Recyclinggründen arsenhaltige Fremdscherben einer transparenten Glaskeramik zugesetzt werden, wird auf den Zusatz bevorzugt verzichtet.

Es wird auch bevorzugt auf den Zusatz von Halogenidverbindungen als Läuterhilfsmittel verzichtet. Diese verdampfen bei der Schmelze und gelangen in die Schmelzwannenatmosphäre. Dabei bilden sich korrosive Verbindungen wie HF, HCl und HBr, die wegen der Korrosion der Feuerfeststeine in der Schmelzwanne und im Abgasstrang nachteilig sind. Die Gläser und Glaskeramiken sind daher bevorzugt bis auf unvermeidliche Verunreinigungsgehalte frei von F, Cl, Br und deren einzelne Gehalte betragen üblicherweise weniger als 500 ppm.

Bevorzugt wird auf Cer- und Antimonoxid verzichtet, da diese die Farbe der transparenten Glaskeramiken verschlechtern.

CoO

Zusätze von CoO in Mengen bis zu 30 ppm können die Entfärbung unterstützen. Bevorzugt ist ein CoO-Gehalt von 0,1 ppm bis 20 ppm CoO. Oberhalb 30 ppm erzeugt das CoO in transparenten Glaskeramiken einen rötlichen Farbstich.

$Nd_2O_3$

Der $Nd_2O_3$-Anteil kann 0 Gew.-% oder > 0 Gew.-% sein.

Bei den aus den erfindungsgemäßen Lithiumaluminiumsilikat-Gläsern hergestellten transparenten Glaskeramiken wird die störende auf Fe/Ti- und/oder Sn/Ti-Farbkomplexen beruhende Farbe in einer bevorzugten Ausführungsform durch Zusätze von $Nd_2O_3$ in Gehalten von 0,005 Gew.-% bis 0,5 Gew.-% verringert. Unterhalb von 0,005 Gew.-% ist die entfärbende Wirkung gering und bevorzugte Untergrenzen für $Nd_2O_3$ sind 0,01 Gew.-%, insbesondere 0,03 Gew.-%. Oberhalb von 0,5 Gew.-% wird die Helligkeit durch die Absorption der Nd-Banden im Bereich des sichtbaren Lichtes unerwünscht verschlechtert. Bevorzugt werden daher bis zu 0,2 Gew.-% zugesetzt. Ein bevorzugter Bereich für $Nd_2O_3$ ist 0,005 Gew.-% bis 0,5 Gew.-%.

Soweit für Komponenten ein Anteil von 0 Gew.-% angegeben wird, bedeutet dies, dass auf die betreffende Komponente im Rohstoffgemenge verzichtet wird. Als unvermeidliche Verunreinigungen können diese Komponenten jedoch vorhanden sein.

In einer bevorzugten Ausführungsform besitzt sowohl das erfindungsgemäße kristallisierbare Lithiumaluminiumsilikat-Glas bzw. der daraus hergestellte Artikel oder die aus dem Glas hergestellte erfindungsgemäße Glaskeramik vorzugsweise folgende Zusammensetzung, die in Gew.-% auf Oxidbasis enthält:

$Li_2O$ 3,2 - < 4,5
$Al_2O_3$ 19 - 23
$SiO_2$ 62 - 68
$Na_2O$ 0 - 1
$K_2O$ 0 - 1
$Na_2O + K_2O$ 0,2 - 1,5 (Bedingung B4a)
MgO 0,05 - < 0,5
CaO 0,05 - 2
SrO 0 - 1,5
BaO 0 - 2,5
ZnO 0 - 2,5
$TiO_2$ 1,8 - 2,8
$ZrO_2$ 1 - < 2,2
$SnO_2$ 0,01 - < 0,12
$TiO_2 + ZrO_2 + SnO_2$ 3,8 - 4,8 (Bedingung B3)
$P_2O_5$ 0 - 4
$Fe_2O_3$ 0,008 - 0,025

mit der Bedingung (dabei beide in Gew.-%):

$$0,005 < MgO \times SnO_2 < 0,06 \text{ (Bedingung B1a)}$$

Gemäß einer weiteren Ausführungsform besitzt das kristallisierbare Lithiumaluminiumsilikat-Glas bzw. der daraus hergestellte Artikel oder die aus dem Glas hergestellte Glaskeramik bevorzugt folgende Zusammensetzung, die in Gew.-% auf Oxidbasis enthält:

$Li_2O$ 3,2 - < 4,2
$Al_2O_3$ 20 - 23
$SiO_2$ 62 - 68
$Na_2O$ 0,1 - 1
$K_2O$ 0 - 1
$Na_2O + K_2O$ 0,2 - 1,2 (Bedingung B4b)
MgO 0,1 - 0,4
CaO 0,05 - 1
SrO 0 - 1,5
BaO 0 - 2,5
SrO + BaO 0,5 - 2,5 (Bedingung B6)
ZnO 0 - 2,5
$B_2O_3$ 0 - 1
$TiO_2$ 1,8 - 2,8
$ZrO_2$ 1 - < 2,2
$SnO_2$ 0,01 - < 0,10
$TiO_2 + ZrO_2 + SnO_2$ 3,8 - 4,8 (Bedingung B3)
$P_2O_5$ 0 - 2
$Fe_2O_3$ 0,008 - 0,02

mit der Bedingung (dabei beide in Gew.-%):

$$0,005 < MgO \times SnO_2 < 0,06 \text{ (Bedingung B1a)}$$

Um die Zielsetzung geringer Farbe mit hoher Lichttransmission und wirtschaftlicher Herstellung weiter zu verbessern, besitzt das kristallisierbare Lithiumaluminiumsilikat-Glas bzw. der daraus hergestellte Artikel oder die aus dem Glas hergestellte Glaskeramik eine besonders bevorzugte Zusammensetzung, die in Gew.-% auf Oxidbasis enthält:

Li$_2$O 3,2 - < 4
Al$_2$O$_3$ 20 - 23
SiO$_2$ 64 - 68
Na$_2$O 0,1 - 1
K$_2$O 0 - 1
Na$_2$O + K$_2$O 0,2 - 1,2 (Bedingung B4b)
MgO 0,1 - 0,4
CaO 0,1 - 1
SrO 0 - 1,5
BaO 0,2 - 2
SrO + BaO 0,5 - 2 (Bedingung B6)
ZnO 0,5 - 2,5
B$_2$O$_3$ 0 - 1
TiO$_2$ > 2 - 2,8
ZrO$_2$ 1,6 - < 2,2
SnO$_2$ 0,03 - < 0,10
TiO$_2$ + ZrO$_2$ + SnO$_2$ 3,8 - 4,8 (Bedingung B3)
P$_2$O$_5$ 0 - 2
Fe$_2$O$_3$ 0,008 - 0,02

mit der Bedingung (dabei beide in Gew.-%):

$$0,005 < MgO \times SnO_2 < 0,06 \text{ (Bedingung B1a)}$$

Die zuvor genannten Zusammensetzungen sind so zu verstehen, dass die aufgeführten Komponenten wenigstens 98 Gew.-%, in der Regel 99 Gew.-% der Gesamtzusammensetzung betragen. Verbindungen einer Vielzahl von Elementen wie z. B. F, Cl, den Alkalien Rb, Cs oder Elementen wie Mn, Hf sind bei den großtechnisch verwendeten Gemengerohstoffen übliche Verunreinigungen. Andere Verbindungen wie z.B. solche der Elemente W, Nb, Ta, Y, Mo, Seltene Erden, Bi, V, Cr, Ni können in geringen Anteilen, typischerweise im ppm-Bereich, enthalten sein.

Der Wassergehalt der kristallisierbaren Gläser zur Herstellung der Glaskeramiken liegt abhängig von der Wahl der Gemengerohstoffe und den Prozessbedingungen bei der Schmelze vorzugsweise zwischen 0,015 und 0,06 mol/l. Dies entspricht β-OH-Werten von 0,16 bis 0,64 mm$^{-1}$. Bei der Umwandlung in die Glaskeramik ändert sich die IR-Bande, die zur Bestimmung des Wassergehaltes herangezogen wird. Dadurch ändert sich der β-OH-Wert für die Glaskeramik, ohne dass sich dabei der Wassergehalt ändert. Die Methode zur Bestimmung der β-OH-Werte ist z. B. in der EP 1074520 A1 beschrieben.

Vorzugsweise weist das kristallisierbare Glas eine 10$^2$ dPas-Temperatur von weniger als 1760 °C und/oder eine Verarbeitungstemperatur V$_A$ von höchstens 1330 °C und/oder eine obere Entglasungsgrenze OEG, die mindestens 15 °C unter der Verarbeitungstemperatur V$_A$ liegt, auf.

Die Blasenqualität des kristallisierbaren Lithiumaluminiumsilikat-Glases und der daraus hergestellten Glaskeramik entspricht den Anforderungen an Blasenzahlen von vorzugsweise unter 5, bevorzugt unter 2 Blasen/kg. Das kristallisierbare Lithiumaluminiumsilikat-Glas ist vorzugsweise gekennzeichnet durch eine Blasenzahl von unter 5, bevorzugt unter 2 Blasen/kg. Dies gilt für Blasen größer als 0,1 mm in einer Dimension. Dies wird vorzugsweise mit den erfindungsgemäßen niedrigen Gehalten des Läutermittels SnO$_2$ und/oder vorzugsweise durch zusätzliche technische Maßnahmen sichergestellt, wie zum Beispiel der Wannenkonstruktion, mit Wällen und/oder Blasdüsen, dem Energieeinsatz und dem Durchsatz der Wanne.

Da gängige Maßnahmen für ausreichende Läuterung bei den erfindungsgemäßen niedrigen SnO$_2$-Gehalten, wie Anpassung des Wannendurchsatzes oder konstruktive Maßnahmen an der Schmelzwanne zusätzliche Kosten verursachen können, ist das kristallisierbare Glas bevorzugt mit einer Hochtemperaturläuterung bei Temperaturen von größer 1750 °C geläutert.

Glaskeramik

Die kristallisierbaren Lithiumaluminiumsilikat-Gläser werden durch einen mehrstufigen Temperaturprozess in eine Glaskeramik umgewandelt.

Die Glaskeramik weist dieselbe Zusammensetzung auf wie das Lithiumaluminiumsilikat-Glas.

Die Glaskeramik ist vorzugsweise transparent.

Gemäß einer ersten Ausführungsform enthält die Glaskeramik Hochquarz-Mischkristalle als Hauptkristallphase.

Für die Minimierung der Streuung der Glaskeramiken mit Hochquarz-Mischkristallen als Hauptkristallphase ist es vorteilhaft, die Kristallitgrößen zu minimieren. Allerdings waren dafür bisher in der Regel wirtschaftlich nachteilige längere Keimbildungs- und Keramisierungszeiten erforderlich. Mit der erfindungsgemäßen Zusammensetzung werden Glaskeramiken erhalten, bei denen die Keimbildungs- und Kristallisationsprozesse schneller ablaufen, so dass sich die Keramisierungszeiten verkürzen lassen.

Aufgrund der kurzen Keramisierungszeiten besitzen die Hochquarz-Mischkristalle der Glaskeramik nach der Keramisierung bevorzugt eine mittlere Kristallitgröße von mindestens 25 nm. Besonders bevorzugt ist die mittlere Kristallitgröße größer als 35 nm. Die wegen zunehmender Streuung bevorzugte Obergrenze ist eine mittlere Kristallitgröße kleiner als 50 nm.

Der Kristallphasenanteil der Hochquarz-Mischkristalle der Glaskeramik beträgt vorzugsweise wenigstens 60 Gew.-% und vorzugsweise höchstens 80 Gew.-%. Dieser Bereich ist vorteilhaft, um die gewünschten mechanischen und thermischen Eigenschaften der Glaskeramik zu erhalten.

Für eine 4 mm dicke transparente Glaskeramik ist die Helligkeit (brightness) Y vorzugsweise größer als 83 %, bevorzugt größer als 84 % und besonders bevorzugt größer als 85 %.

Die Farbe c* beträgt vorzugsweise höchstens 4, bevorzugt weniger als 3,5 und besonders bevorzugt weniger als 3.

Die Werte Helligkeit und Farbe gelten für die Messung mit Normlicht D65, 2° an 4 mm dicken polierten Proben gemäß der Norm DIN 5033.

Die Streuung (engl. haze) wird nach ASTM D1003-13 an 4 mm dicken polierten Proben der LAS-Glaskeramik gemessen. Der Haze-Wert beträgt bevorzugt weniger als 2,5 %, weiter bevorzugt weniger als 2 % und besonders bevorzugt weniger als 1,8 %. Oberhalb von 2,5 % ist die Trübung in der Regel visuell störend. Werte weniger als 2% sind bevorzugt, weil die Streuung sonst bei dunklen, also zum Beispiel schwarzen Unterseitenbeschichtungen auffällig werden kann.

Die erfindungsgemäße transparente Glaskeramik weist dadurch keine visuell störende Lichtstreuung auf. Dadurch wird die Durchsicht auf Gegenstände und Unterseitenbeschichtungen nicht verfälscht. Leuchtende Anzeigen wie Displays oder Bildschirme unter der Glaskeramikplatte sind dadurch klar mit scharfen Konturen und ohne Streuung sichtbar.

Die Merkmale der erfindungsgemäßen Glaskeramik beruhen vorzugsweise auf der Kombination einer definierten Zusammensetzung, die der des Grünglases entspricht, aus dem sie entstanden ist, mit einer angepassten schnellen Keramisierung mit einer Gesamtdauer von weniger als 300 Minuten, wie sie mit dem erfindungsgemäßen Verfahren und in den Beispielen beschrieben wird.

Die thermische Ausdehnung der Glaskeramik wird bevorzugt in einem Temperaturbereich zwischen Raumtemperatur und 700 °C auf Werte um $0 \pm 0,5 \cdot 10^{-6}$/K eingestellt.

In einer anderen Ausführungsform enthält die Glaskeramik Keatit-Mischkristalle als Hauptkristallphase. Aus wirtschaftlichen Gründen ist es vorteilhaft, wenn aus der gleichen Zusammensetzung des kristallisierbaren Lithiumaluminiumsilikat-Glases sowohl transparente Glaskeramiken mit Hochquarz-Mischkristallen als Hauptkristallphase als auch Glaskeramiken mit Keatit-Mischkristallen als Hauptkristallphase hergestellt werden können. Durch die Ausgestaltung des Keramisierungsprogramms, insbesondere durch die Wahl von Maximaltemperatur und Haltezeit, lässt sich bei letzteren das Aussehen von transparent über transluzent bis opak einstellen.

Die Begriffe opak, transluzent und transparent werden aus Sicht der Anwendung hinsichtlich der Anzeigefähigkeit von LEDs durch den Glaskeramikartikel verstanden. Der Bereich einer geringen Helligkeit Y der Glaskeramikplatte von weniger als 2 % in Transmission wird als opak bezeichnet, da die Anzeigefähigkeit nicht zufriedenstellend ist. Der Bereich höherer Helligkeit aber mit sichtbarer Streuung mit Haze-Werten oberhalb 2,5 % wird als transluzent betrachtet.

Die mittlere Kristallitgröße ist bevorzugt größer als 60 nm. Der Kristallphasenanteil beträgt mehr als 60 Gew.-% und bevorzugt mehr als 80 Gew.-%. Durch die unterschiedlichen Eigenschaftskombinationen der beiden Glaskeramik-Ausführungen wird eine Vielzahl von Anwendungen wirtschaftlich vorteilhaft bedient.

Die bevorzugte Geometrie für die erfindungsgemäßen Glaskeramiken bzw. die daraus hergestellten Artikel ist in Form von Platten. Die Glaskeramik liegt vorzugsweise in Form einer Platte mit einer Dicke von 2 mm bis 20 mm vor. Die Platte weist vorzugsweise eine Dicke von 2 mm bis 20 mm auf, weil sich damit wichtige Anwendungen erschließen. Bei geringeren Dicken wird die Festigkeit beeinträchtigt, höhere Dicken sind aufgrund des höheren Materialbedarfs weniger wirtschaftlich. Bis auf die Anwendung als Sicherheitsglas, bei der es auf hohe Festigkeiten ankommt, wird die Dicke daher bevorzugt unter 6 mm gewählt.

Der bevorzugte erfindungsgemäße Artikel ist eine gewalzte Glaskeramikplatte. Die maximale Flächengröße der Artikel wird bei der Herstellung durch die Bandbreite bei der Heißformgebung (Walzen bzw. Floaten) und die Größe der Keramisierungsöfen limitiert. Für bestimmte Anwendungen wie Brandschutzgläser oder Küchenarbeitstische mit integrierten Kochzonen sind Dimensionen mit Kantenlängen bis zu 3 m bevorzugt, da diese Größe die Geschosshöhe bei Fenstern und Kochflächen in Großküchen erfüllt.

Die Glaskeramikplatte und die vorzugsweise daraus hergestellten Artikel können dabei nicht nur eben ausgeformt sein, sondern auch dreidimensional verformt sein. Beispielsweise können abgekantete, gewinkelte oder gewölbte Platten verwendet werden. Die Platten können rechtwinklig oder in anderen Formen vorliegen sowie neben ebenen Bereichen dreidimensional verformte Bereiche wie z.B.

Woks oder eingewalzte Stege oder Flächen als Erhebungen bzw. Vertiefungen enthalten. Die geometrischen Verformungen der Platten werden bei der Heißformgebung, z. B. durch strukturierte Formgebungswalzen, oder durch nachgelagerte Heißformgebung an den Ausgangsgläsern, zum Beispiel durch Brenner, Infrarotstrahler oder durch Schwerkraftsenken, vorgenommen. Beim Keramisieren wird mit unterstützenden keramischen Formen, z. B. ebenen Unterlagen gearbeitet, um unkontrollierte Änderungen der geometrischen Form zu vermeiden. Eine nachträgliche Politur einer oder beider Seiten ist optional möglich, wenn es die Anwendung erfordert.

Herstellungsverfahren des Glases

Das erfindungsgemäße Verfahren zur Herstellung des kristallisierbaren Lithiumaluminiumsilikat-Glases ist gekennzeichnet durch die Schritte:

a) Bereitstellen eines Gemengesatzes aus technischen Rohstoffen;
b) Schmelzen des Gemengesatzes und Hochtemperaturläutern bei Temperaturen größer als 1750 °C;
c) Abkühlen der Glasschmelze und Formgebung bei Temperaturen in der Nähe der Verarbeitungstemperatur $V_A$; und
d) Abkühlen in einem Entspannungsofen auf Raumtemperatur, wobei unerwünschte Spannungen im Glas entfernt werden.

Unter Raumtemperatur werden 20 °C verstanden.

Der Gemengesatz ist so ausgebildet, dass nach der Schmelze Gläser mit den erfindungsgemäßen Zusammensetzungen und Eigenschaften entstehen. Durch einen bevorzugten Scherbenzusatz von 20 bis 80 Gew.-% im Gemengesatz wird das Einschmelzen begünstigt, und es lassen sich höhere Wannendurchsätze erhalten. Es wird ein Hochtemperatur-Läuteraggregat eingesetzt und die Temperatur der Glasschmelze in der Schmelzwanne beträgt mehr als 1750°C, bevorzugt mehr als 1850°C. Bei der Formgebung wird bevorzugt ein Glasband mit plattenförmiger Geometrie über Walzen hergestellt und zur Vermeidung von Spannungen in einem Kühlofen auf Raumtemperatur abgekühlt. Aus diesem Glasband werden nach Sicherstellung der Qualität hinsichtlich von Volumen- und Oberflächendefekten Platten der gewünschten Größe hergestellt.

Für eine wirtschaftliche Herstellung ist eine niedrige Schmelztemperatur vorteilhaft und wird durch eine niedrigere Viskosität der Glasschmelze bei hohen Temperaturen sichergestellt. Hierfür ist die Temperatur, bei der die Viskosität der Glasschmelze $10^2$ dPas beträgt, eine charakteristische Größe. Diese sogenannte $10^2$ dPas-Temperatur liegt für die erfindungsgemäßen Gläser vorzugsweise bei weniger als 1760 °C, bevorzugt weniger als 1755 °C und besonders bevorzugt weniger als 1750 °C. Die niedrige Viskosität der Glasschmelze bei hohen Temperaturen erlaubt es, die Temperatur in der Schmelzwanne niedriger einzustellen und verlängert damit die Lebensdauer der Schmelzwanne. Der Energieverbrauch bezogen auf die Menge der hergestellten Glaskeramik wird vermindert. Da eine niedrige Glasviskosität auch den Aufstieg von Blasen und damit die Läuterung begünstigt, ist eine niedrige Glasviskosität auch vorteilhaft für die Blasenqualität.

Es ist wirtschaftlich vorteilhaft, die Temperatur bei der Formgebung abzusenken. Die Standzeiten der Formgebungswerkzeuge werden erhöht, und es fällt weniger abzuführende Verlustwärme an. Die Formgebung, meist durch Walzen oder Floaten, findet bei einer Viskosität der Glasschmelze von $10^4$ dPas statt. Diese Temperatur wird auch als Verarbeitungstemperatur VA bezeichnet und liegt für die erfindungsgemäßen Gläser vorzugsweise bei höchstens 1330 °C, bevorzugt bei höchstens 1325 °C.

Das kristallisierbare Glas verfügt bei der Formgebung aus der Schmelze über eine ausreichende Entglasungsfestigkeit. Bei der Formgebung im Kontakt mit dem Formgebungsmaterial (z. B. Edelmetall bei der Ziehdüse im Walzprozess) bilden sich im Glas keine für die Festigkeit der Glaskeramik kritischen und visuell auffälligen Kristalle. Die Grenztemperatur, unterhalb der es zu kritischen Entglasungen kommt, d.h. die obere Entglasungsgrenze (OEG), liegt vorzugsweise unterhalb und besonders bevorzugt mindestens 15 °C unter der Verarbeitungstemperatur VA. Bei dieser Mindestdifferenz wird für den Formgebungsprozess ein ausreichendes Prozessfenster definiert. Besonders vorteilhaft ist ein Prozessfenster VA-OEG, das mindestens 20 °C beträgt. Die Differenz der Temperaturen VA - OEG ist also ein Maß für die Entglasungsfestigkeit.

Geeignete Formgebungsverfahren für die plattenförmige Geometrie sind insbesondere Walzen und Floaten. Bevorzugtes Formgebungsverfahren aus der Glasschmelze ist ein Verfahren über zwei Walzen, da dieses Verfahren wegen der schnelleren Abkühlung Vorteile hat, wenn die Zusammensetzungen zu Entglasungen neigen.

Keramisierungsverfahren

Der nächste Prozessschritt ist die Keramisierung auf ebenen oder dreidimensional geformten, hochtemperaturstabilen Unterlagen (Brennhilfsmitteln). Bevorzugt wird die Keramisierung in einem Rollenofen durchgeführt.

Das erfindungsgemäße Verfahren zur Herstellung einer Glaskeramik ist dadurch gekennzeichnet, dass die Keramisierung mit folgenden Verfahrensschritten in der folgenden Reihenfolge durchgeführt wird:

a) Erhöhen der Temperatur des kristallisierbaren Glases auf eine Temperatur $T_a$ im Bereich von 660 °C bis 730°C von 3 bis 60 Minuten;

b) Erhöhen der Temperatur des kristallisierbaren Glases innerhalb des Temperaturbereichs der Keimbildung von $T_a$ bis 800°C über einen Zeitraum von 10 bis 100 Minuten;

c) Erhöhen der Temperatur des Kristallisationskeime enthaltenden Glases innerhalb von 5 bis 80 Minuten Dauer in den Temperaturbereich hoher Kristallwachstumsgeschwindigkeit von 850 °C bis 950°C;

d) Halten bei einer maximalen Temperatur innerhalb des Temperaturbereiches von 850 °C bis 950°C über 0 bis 60 Minuten, wobei Kristalle des Typs Hochquarz-Mischkristalle auf den Kristallisationskeimen wachsen,

e) rasches Abkühlen der erhaltenen Glaskeramik auf Raumtemperatur in weniger als 150 Minuten,

wobei die Keramisierung des Glases eine Gesamtdauer von weniger als 300 min aufweist.

Vorzugsweise liegt die Haltezeit im Verfahrensschritt d) bei 1 bis 60 Minuten.

Die erforderlichen hohen Heizraten können großtechnisch in Rollenöfen realisiert werden. Der Temperaturbereich von 660 °C bis 730 °C entspricht in etwa der Transformationstemperatur des Glases. Oberhalb der Temperatur von 730 °C bis 800 °C liegt der Bereich mit hohen Keimbildungsraten, wobei das Maximum der Keimbildungsrate bei 750 °C bis 760 °C liegt.

Der Temperaturbereich der Keimbildung von $T_a$ bis 800 °C wird über einen Zeitraum von 10 Minuten bis 100 Minuten durchfahren. Danach wird die Temperatur des Kristallisationskeime enthaltenden Glases innerhalb von 5 Minuten bis 80 Minuten auf eine Temperatur von 850 °C bis 950 °C erhöht, die sich durch hohe Kristallwachstumsgeschwindigkeiten der Hochquarz-Mischkristallphase auszeichnet. Eine maximale Temperatur innerhalb des Temperaturbereichs von 850 °C bis 950 °C wird von 0 bis 60 Minuten gehalten. Dabei wird das Gefüge der Glaskeramik homogenisiert und die optischen, physikalischen und chemischen Eigenschaften eingestellt.

Die erhaltene Glaskeramik wird danach in weniger als 150 Minuten und mehr als 10 min auf Raumtemperatur rasch abgekühlt.

Insgesamt beträgt die Keramisierungszeit weniger als 300 Minuten, bevorzugt weniger als 200 Minuten und besonders bevorzugt weniger als 150 Minuten.

Darüber hinaus erfüllt die aus dem kristallisierbaren Glas hergestellte transparente LAS-Glaskeramik bestimmte Eigenschaften. Die Helligkeit Y soll hoch sein, und die Farbe c* soll gering sein, damit die Durchsicht auf Gegenstände oder auf eine Unterseitenbeschichtung sowie die Ansicht von Anzeigen nicht verdunkelt oder im Farbton verfälscht wird. Die transparente Glaskeramik soll ohne visuell störende Lichtstreuung sein, damit Durchsicht und die Anzeigen klar sind und nicht gestört werden. Dies soll auch bei den angestrebten kurzen Keramisierungszeiten gewährleistet sein.

Die Gehalte der für die Bildung von Kristallphasen und Restglas verantwortlichen Komponenten sind so optimiert, dass hohe Werte der Helligkeit, geringe Farbe und geringe Streuung auch bei kurzen Keramisierungszeiten erreicht werden. Unter kurzer Keramisierungszeit wird verstanden, dass die Glaskeramik in einer Zeit von weniger als 300 Minuten, bevorzugt weniger als 150 Minuten und besonders bevorzugt weniger als 100 Minuten aus dem kristallisierbaren LAS-Glas hergestellt ist.

In diesen bevorzugten Bereichen in Verbindung mit den weiter spezifizierten Zusammensetzungsbereichen stellt sich der gewünschte Effekt einer Minimierung der Farbe, Erhöhung der Helligkeit und günstigen Fertigungseigenschaften wie Minimierung der Lichtstreuung bei schneller Keramisierung verknüpft mit niedriger Schmelz- und Verarbeitungstemperatur $V_A$ besonders vorteilhaft ein.

Verwendung der Glaskeramik

Vorzugsweise findet die transparente Lithiumaluminiumsilikat-Glaskeramik mit Hochquarz-Mischkristallen als Hauptkristallphase Verwendung als Brandschutzglas, Kaminsichtscheibe, Backofensichtscheibe, die insbesondere für Pyrolyseherde verwendet wird, Kochfläche, die eine Unterseitenbeschichtung aufweisen kann, Abdeckung im Beleuchtungssektor, Sicherheitsglasscheibe, die vorzugsweise im Laminatverbund verwendet wird, Trägerplatte oder Ofenauskleidung, die vorzugsweise in thermischen Prozessen zum Einsatz kommt.

Bei Kaminsichtscheiben wird eine gute Durchsicht auf den Brennraum und die Flammen gewünscht. Bei Kochflächen mit farbiger Unterseitenbeschichtung soll die Farbe der Unterseitenbeschichtung nicht durch die Farbe der Glaskeramik verfälscht werden. Für die genannten Verwendungen sind die erfindungsgemäßen hohen Werte der Helligkeit

(brightness) Y und die geringe Farbe c* in Verbindung mit der geringen unauffälligen Lichtstreuung bevorzugt.

Durch Aufbringen einer blickdichten Beschichtung auf Ober- und/oder Unterseite lässt sich aus der transparenten Glaskeramik eine farbige Kochfläche mit der geforderten visuellen Abdeckung herstellen, um den Einblick in die technischen Einbauten unter der Kochfläche zu verhindern. Die Beheizung der Kochfläche erfolgt wie üblich mit Gasbrennern, Strahlungsheizungen oder induktiv.

Aussparungen in der Beschichtung erlauben das Anbringen von Sensorbereichen, farbigen und weißen Anzeigenvorrichtungen sowie Displays.

Es ist möglich, Beschichtungen auf Ober- und Unterseite der transparenten Glaskeramikplatte zu kombinieren und dabei auch teiltransparente Schichten einzubeziehen. Ebenso können Markierungen, z. B. für Kochzonen, aufgebracht werden. Dabei sind die bekannten verschiedenen Arten von Beschichtungen wie z. B. mit organischen oder anorganischen Dekorfarben, Lüsterfarben, Silikon- und Sol-Gelbasierten Farben, gesputterten Schichten, metallischen Schichten, Oxinitrid-, Oxicarbid-Schichten und so weiter kombinierbar. Die Schichten können auch übereinander aufgebracht werden.

Auch bei Kamin- oder Ofensichtscheiben können Beschichtungen, wie z. B. zur blickdichten Abdeckung am Rand der Scheiben, gewünscht sein. Die Anordnung der Beschichtungen auf Ober- bzw. Unterseite der Glaskeramikplatte wird nach den ästhetischen und den spezifischen Anforderungen an chemische und physikalische Eigenschaften vorgenommen.

Die Anzeigenvorrichtungen bestehen aus Licht emittierenden elektronischen Bauteilen, wie z. B. aus Leuchtdioden, OLEDs, LCDs oder Fluoreszenzanzeigen. Es sind alle Formen von Anzeigen, punktuelle wie flächige, einschließlich 7-Segment Displays, möglich. Die Emissionsspektren der strahlenden Anzeigen können ein oder mehrere Maxima und breite Bereiche haben, so dass die Anzeigen farbig (wie z. B. blau, purpur, rot, grün, gelb, orange) oder weiß erscheinen. Aufgrund der geringen Farbe c* der Glaskeramik können auch schwarz-weiße und farbige Displays oder Bildschirme ohne störende Farbverfälschung hergestellt werden. Die Farbe der Displays wird optional durch auf der Unterseite aufgebrachte Farbfilter oder Farbschichten verändert. Der Farbton der Anzeigen kann dadurch beeinflusst und ggf. auch korrigiert werden, wenn er durch die Glaskeramik verändert wird. Ebenso können Kontroll-, Sensor- und Steuerungs-/Bedienungselemente, wie z. B. solche des kapazitiven oder induktiven Typs, an der Glaskeramikplatte angebracht werden.

Diese Verwendungen werden alternativ auch durch eine transparente, transluzente oder opake Lithiumaluminiumsilikat-Glaskeramik mit Keatit-Mischkristallen als Hauptkristallphase realisiert. In transluzenter oder opaker Form ist die Verwendung als Kochfläche, Trägerplatte für thermische Prozesse (setter plate), Abdeckplatte in Mikrowellenherden oder Wärmestrahlern sowie Auskleidung von Brennräumen bevorzugt. Dabei beträgt die Helligkeit Y bevorzugt weniger als 30%.

Weitere bevorzugte Verwendungen für beide Glaskeramiken, seien sie mit Hochquarz- oder mit Keatit-Mischkristallen als Hauptkristallphase, sind die als Trägerplatte oder Ofenauskleidung. In der Keramik-, Solar- oder Pharmaindustrie oder der Medizintechnik eignen sie sich insbesondere für Produktionsprozesse unter hochreinen Bedingungen, als Auskleidung von Öfen, in denen chemische oder physikalische Beschichtungsverfahren durchgeführt werden oder als chemisch resistente Laborausstattung. Weiter finden sie Verwendung als glaskeramischer Gegenstand für Hoch- oder extreme Niedrigtemperaturanwendungen, als Ofenfenster für Verbrennungsöfen, als Hitzeschild zur Abschirmung heißer Umgebungen, als Abdeckung für Reflektoren, Flutlichter, Projektoren, Beamer, Fotokopierer, für Anwendungen mit thermo-mechanischer Belastung, beispielsweise in Nachtsichtgeräten oder als Abdeckung für Heizelemente, insbesondere als Koch-, Grill- oder Bratfläche, als weiße Ware, als Heizkörperabdeckung, als Wafersubstrat, als Gegenstand mit UV-Schutz, als Fassadenplatte oder als Material für Gehäusekomponenten beispielsweise von elektronischen Geräten und/oder Abdeckgläser für IT wie Mobiltelefone, Laptops, Scannergläser oder als Komponente für ballistischen Schutz.

Die vorliegende Erfindung wird anhand der folgenden Beispiele verdeutlicht.

Es zeigen:

Figur 1    ein Diagramm mit der Transmissionskurve der Glaskeramik von Beispiel 13 (Glas Nr. 11) aus Tabelle 1,

Figur 2    ein Diagramm zur Erläuterung der Absorptionsbandenverschiebung.

Die erfindungsgemäßen kristallisierbaren LAS-Gläser 1 bis 11 und die Vergleichsgläser 12 bis 18 wurden aus in der Glasindustrie üblichen Gemengerohstoffen bei Temperaturen von 1620 °C, 4 Stunden eingeschmolzen.

Als Gemengerohstoffe wurden wahlweise eingesetzt: Lithiumkarbonat, Aluminiumoxid, Aluminiumhydroxid, Aluminiummetaphosphat, Quarzsand, Natron- und Kalisalpeter, Natrium- und Kaliumkarbonat, Magnesiumoxid, Kalk, Dolomit, Strontiumkarbonat, Bariumkarbonat, Zinkoxid, Zinnoxid, Titanoxid, Zirkonsilikat, Zirkonoxid, optional Neodymoxid.

Als Hauptrohstoffe und technische Rohstoffe für die Einführung des $Li_2O$ werden bevorzugt solche eingesetzt, die weniger als 150 ppm $Fe_2O_3$ enthalten wie Quarz, Aluminiumoxid, Aluminiumhydroxid und Lithiumkarbonat. Mit dieser Wahl lassen sich die Forderungen nach wirtschaftlichen Rohstoffen und einem geringen Verunreinigungsgehalt färbender Verbindungen von Fe, Ni, Cr, V, Cu, Mo, S vereinbaren.

Nach dem Einschmelzen des Gemenges in Tiegeln aus gesintertem Kieselglas wurden die Laborschmelzen in Pt/Rh-Tiegel mit Innentiegel aus Kieselglas umgegossen und bei Temperaturen von 1600 °C, 60 Minuten durch Rühren homogenisiert. Nach dieser Homogenisierung wurden die Gläser für 3 Stunden bei 1640 °C geläutert. Eine Hochtemperaturläuterung fand nicht statt, da es sich um Laborschmelzen handelt.

Anschließend wurden Stücke von ca. $120 \times 140 \times 30$ mm³ Größe gegossen und in einem Kühlofen beginnend ab 660 °C auf Raumtemperatur abgekühlt, um Spannungen abzubauen. Die Gussstücke wurden in die für die Untersuchungen und für die Keramisierung benötigten Größen unterteilt. Das Glas 11 wurde großtechnisch in einer Fertigungswanne geschmolzen.

In Tabelle 1 sind Zusammensetzungen und Eigenschaften der kristallisierbaren Gläser aufgeführt. Neben den Gehalten der Komponenten sind auch die relevanten Komponentenbeziehungen dargestellt. Dabei handelt es sich bei den Gläsern 1 bis 11 um erfindungsgemäße Gläser, also Ausführungsbeispiele, und bei den Gläsern 12 bis 18 um Vergleichsgläser außerhalb der vorliegenden Erfindung, also Vergleichsbeispiele. Die Zusammensetzungen der Vergleichsgläser 12 bis 18 sind außerhalb der Erfindung und zeigen die beschriebenen Nachteile bei den Fertigungseigenschaften (Schmelz-, Verarbeitungstemperatur, Entglasungsfestigkeit, Walzbelag) und/oder der Farbe, Helligkeit, Streuung nach Umwandlung in die Glaskeramik. Aufgrund von typischen Verunreinigungen in den verwendeten großtechnischen Gemengerohstoffen addieren sich die Zusammensetzungen nicht genau zu 100 Gew.-%. Typische Verunreinigungen, auch wenn nicht absichtlich in die Zusammensetzung eingeführt, sind F, Cl, B, Mn, Rb, Cs, Hf, die üblicherweise weniger als 0,2 Gew.-% betragen. Sie werden oft über die Rohstoffe für die verwandten Komponenten eingeschleppt, so z.B. Rb und Cs über die Na-, bzw. K- Rohstoffe, oder Hf über den Zr-Rohstoff.

Der mit IR-Spektroskopie gemessene Wassergehalt der kristallisierbaren Gläser ist in Tabelle 1 angegeben.

In Tabelle 1 sind auch die Eigenschaften im glasigen Zustand Transformationstemperatur Tg [°C], Verarbeitungstemperatur $V_A$ [°C], $10^2$ dPas-Temperatur [°C], obere Entglasungsgrenze OEG [°C] und Entglasungsfestigkeit $V_A$ - OEG aufgeführt. Zur Messung der OEG werden die Gläser in Pt/Rh10-Tiegeln geschmolzen. Anschließend werden die Tiegel für 5 Stunden bei verschieden Temperaturen im Bereich der Verarbeitungstemperatur gehalten. Die höchste Temperatur, bei der die ersten Kristalle an der Kontaktfläche der Glasschmelze zur Tiegelwand auftreten, bestimmt die OEG-Temperatur.

Die Tabelle 2 betrifft die aus den Gläsern der Tabelle 1 hergestellten Glaskeramiken mit Hochquarz-Mischkristallen als Hauptkristallphase. Dabei handelt es sich bei den Beispielen 1 bis 13 um Ausführungsbeispiele und bei den Beispielen 14 bis 20 um Vergleichsbeispiele.

In Tabelle 2 sind für die jeweils angegebenen Keramisierungsprogramme, also Programm 1 oder Programm 2, Eigenschaften der Glaskeramiken, nämlich spektrale Transmission [%] bei 400 nm, Infrarottransmission [%] bei 1600 nm, thermische Ausdehnung zwischen 20 °C und 700°C [$10^{-6}$/K], und der mittels Röntgenbeugung gemessener Phasengehalt [Vol. %] der Hauptkristallphase, bestehend aus Hochquarz-Mischkristallen, sowie die mittlere Kristallitgröße [nm] aufgezeigt. In der Tabelle 2 sind auch die Lichttransmission Y aus dem CIE-Farbsystem und die Farbkoordinaten L*, a*, b* aus dem CIELAB-System mit der Größe c* als Maß für die Farbe (Buntheit) sowie der Haze-Wert als Maß für die Streuung angegeben.

Tabelle 3 zeigt die Beispiele 21 und 22 für die aus dem Glas 10 der Tabelle 1 hergestellten Glaskeramiken mit Keatit-Mischkristallen als Hauptkristallphase. Neben den Transmissionswerten sind zusätzlich auch die Farbwerte für die Messung in Remission dargestellt. Weiterhin wird qualitativ das Aussehen der Beispiele beschrieben.

Keramisierungsprogramme 1 - 3

Bei dem Keramisierungsprogramm 1 wird in einem Laborofen, der hohe Heizraten ermöglicht in 24 min auf 720 °C aufgeheizt. In dem Temperaturbereich von 720 °C bis 800 °C wird die Heizrate für ausreichende Keimbildung verringert, damit keine visuell störende Streuung auftritt.

Oberhalb 800 °C bis zur Maximaltemperatur 890 °C wird die Heizrate weiter verringert, da in diesem Bereich die Kristallisation der Hochquarz-Mischkristalle stattfindet. Der damit einhergehende Schrumpfungsprozess darf nicht zu schnell ablaufen, da es sonst zu Unebenheiten des Artikels kommen kann. In diesem Temperaturbereich ist auch die Bildung der störenden Fe/Ti- und Sn/Ti-Farbkomplexe verstärkt. Die Gesamtzeit von 800 °C bis Erreichen der Maximaltemperatur 890 °C beträgt 53 min, mit anschließender Haltezeit 10 min. Bei der Maximaltemperatur wird die Zusammensetzung von Kristallen und Restglas eingestellt und die Mikrostruktur homogenisiert. Dabei werden die chemischen und physikalischen Eigenschaften der Glaskeramik eingestellt. Das Abkühlen erfolgt bis 600 °C gesteuert, dann wird die Probe auf Raumtemperatur durch Öffnen der Ofentür abgeschreckt.

Keramisierungsprogramm 1, (Keramisierungszeit 136 min):

a) schnelles Aufheizen von Raumtemperatur auf $T_a$ = 720 °C in 24 min,

b) Temperaturerhöhung von $T_a$ = 720 °C bis 800 °C in 20 min (Heizrate 4 °C/min),

c) Temperaturerhöhung von 800 °C bis 890 °C in 53 min (Heizrate 1,7 °C/min),

d) Haltezeit von 10 min bei einer Maximaltemperatur von 890°C,

e) Abkühlen innerhalb von 29 min von 890 °C auf 600 °C (mit 10 °C/min), dann schnelle Abkühlung auf Raumtemperatur.

Bei dem Keramisierungsprogramm 2 ist die Keramisierungszeit insgesamt verkürzt und die Keimbildungszeit verlängert. Bei dem Keramisierungsprogramm 2 wird bis zu einer Temperatur von 720 °C im Keramisierungsofen in 24 min aufgeheizt. In dem Temperaturbereich von 720 °C bis 800 °C wird die Heizrate für ausreichende Keimbildung weiter verringert, damit keine visuell störende Streuung auftritt. Die Gesamtzeit zwischen 720 °C bis 800 °C beträgt 33 min. Oberhalb von 800 °C erfolgt die Kristallisation der gewünschten Hochquarz-Mischkristallphase. Die Gesamtzeit von 800°C bis Erreichen der Maximaltemperatur 885 °C beträgt 28 min. Bei der Maximaltemperatur von 885 °C, Haltezeit 10 min, wird die Zusammensetzung von Kristallen und Restglas eingestellt und die Mikrostruktur homogenisiert. Das Abkühlen erfolgt bis 800°C gesteuert in 10 min mit einer Kühlrate von 8,5 °C/min, dann wird die Probe auf Raumtemperatur durch Öffnen der Ofentür abgeschreckt; also zusammengefasst:

Keramisierungsprogramm 2 (Keramisierungszeit 105 min):

a) schnelles Aufheizen von Raumtemperatur auf $T_a$ = 720 °C in 24 min (Heizrate 30 °C/min),

b) Temperaturerhöhung von $T_a$ = 720 bis 800 °C in 33 min (Heizrate 2,4 °C/min),

c) Temperaturerhöhung von 800 auf 885°C innerhalb von 28 min, dabei Aufheizen mit 1°C/min auf 820°C, weiteres Aufheizen mit 8°C/min auf 885°C;

d) Haltezeit 10 min bei Maximaltemperatur 885°C,

e) Abkühlen auf 800°C innerhalb 10 min, dann schnelle Abkühlung auf Raumtemperatur.

Mit einem zusätzlichen Keramisierungsprogramm 3 erfolgte die Umwandlung des kristallisierbaren Glases Nr. 10 (Tabelle 1) in Glaskeramiken mit Keatit-Mischkristallen als Hauptkristallphase. Bei diesem Programm wurde bis 885 °C (Schritt d)) wie bei Programm 2 verfahren, Dann wurde abweichend von Programm 2 ohne Haltezeit bei 885 °C mit einer Heizrate von 10 °C/min auf eine Maximaltemperatur $T_{max}$ mit Haltezeit $t_{max}$ erhitzt (Angaben siehe Tabelle 3). Von der Maximaltemperatur wurde mit 10 °C/min auf 800 °C abgekühlt und dann schnell auf Raumtemperatur abgekühlt.

Die Transmissionsmessungen wurden an polierten Platten der Dicke 4 mm mit Normlicht D65, 2° mit dem Gerät Perkin-Elmer Lambda 900 durchgeführt. Aus den gemessenen spektralen Werten im Bereich zwischen 380 nm und 780 nm, der das sichtbare Lichtspektrum repräsentiert, wird die Helligkeit Y nach DIN 5033 für die gewählte Normlichtart D65 und Beobachterwinkel 2° berechnet.

Aus diesen Messungen werden ebenfalls die Farbkoordinaten L*, a*, b* aus dem CIELAB-System und die Größe c* berechnet. Auch die Messung der Remission erfolgte nach DIN 5033 mit diesen Parametern.

Die Streuung der Glaskeramiken wird durch Messung der Trübung (engl. haze) bestimmt. Dabei wird die Trübung mit Normlicht C an beidseitig polierten 4 mm dicken Platten mit einem kommerziellen Messgerät "haze-guard plus" der Firma BYK-Gardner gemäß der Norm ASTM D1003-13 gemessen und durch den Haze-Wert charakterisiert.

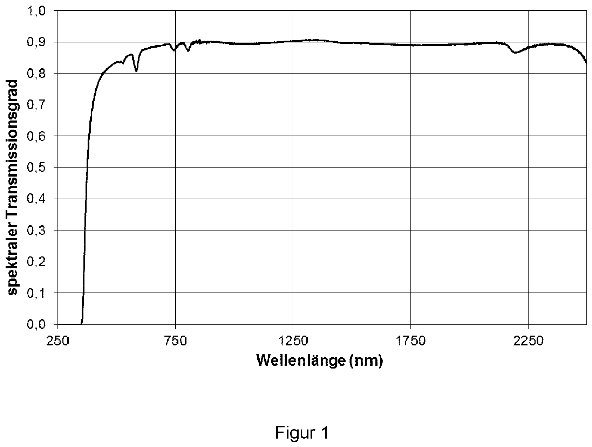

Das Glas 11 wurde großtechnisch geschmolzen. Die Zusammensetzung ist entsprechend den Anforderungen an die wirtschaftliche Herstellung und Transparenz einer Lithiumaluminiumsilikat-Glaskeramik optimiert. Sie zeichnet sich durch niedrige $10^2$ dPas- Temperatur, niedrige Verarbeitungstemperatur $V_A$ und gute Entglasungsfestigkeit aus. Die Glasschmelze wurde bei hohen Temperaturen von ca. 1850°C, 15 min geläutert. Die Blasenqualität dieses Glases war hervorragend und betrug < 2 Blasen/kg Glas. Es wurde bei der Formgebung ein beidseitig glattes Glasband von 4 mm Dicke gewalzt und zur Vermeidung von Spannung in einem Kühlofen abgekühlt. Die Bildung des Sn-haltigen Walzbelags war gegenüber Gläsern mit höheren $SnO_2$-Gehalten vermindert. Aus diesem Glasband wurden Platten der Größe 500 × 500 × 4 mm geschnitten und in einem großtechnischen Rollenofen keramisiert. Das Keramisierungsprogramm entsprach Programm 2 und die kristallisierbaren Glasplatten befanden sich auf ebenen Unterlagsplatten. Die erhaltenen transparenten Glaskeramikplatten verfügten über eine sehr gute Ebenheit von < 0,3 % der Kantenlänge. Die Eigenschaften der Glaskeramik sind in Tabelle 2 als Beispiel 13 dargestellt. Die Transmissionskurve dieser erfindungsgemäßen Glaskeramik ist in der Figur 1 dargestellt. Die Transparenz entspricht den vorteilhaften Werten der Erfindung mit Helligkeit Y von 84,7 %, Färbung c* von 3,1 und ohne visuell störende Streuung.

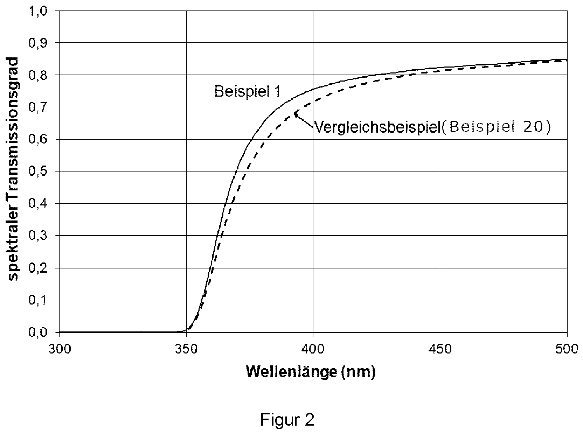

Bei einem weiteren Vergleichsglas 18 (siehe Tabelle 1) wurde im Wesentlichen die Zusammensetzung von Glas 1 übernommen und der MgO-Gehalt wurde auf 0,77 Gew.-% erhöht. Das Vergleichsglas 18 wurde mit dem Keramisierungsprogramm 1 in eine Glaskeramik überführt (siehe Vergleichsbeispiel 20 in Tabelle 2). Dieses Vergleichsbeispiel 20 wurde dem erfindungsgemäßen Beispiel 1 aus Tabelle 1 in Figur 2 gegenübergestellt. Beispiel 1 ist das ebenfalls nach dem gleichen Keramisierungsprogramm 1 umgewandelte Glas 1. Die Figur 2 zeigt den beschriebenen Effekt der Absorptionsbandenverschiebung, der auf den unterschiedlichen MgO-Gehalt zurückzuführen ist. Die Sn/Ti-Absorptionsbande im blauen Bereich des sichtbaren Lichtes wird in ihrer Intensität und in ihrer Lage im sichtbaren Spektrum beeinflusst. Durch den erfindungsgemäßen MgO- Gehalt und die Bedingung für das Produkt der Komponenten MgO $\times$ SnO$_2$ wird im kurzwelligen Bereich des Spektrums eine höhere spektrale Transmission erreicht, was sich sehr günstig auf die Farbe c* auswirkt. Gegenüber Beispiel 1 mit MgO $\times$ SnO$_2$ = 0,22 und mit Farbe c* = 2,6 betragen die Werte bei dem Vergleichsbeispiel 20 MgO $\times$ SnO$_2$ = 0,06 und c* = 3,2.

Als typische Verunreinigungen wurden analysiert: 0,04 Gew.-% HfO$_2$, 8 ppm As$_2$O$_3$, 1 ppm Cr$_2$O$_3$, 1 ppm CuO, 3 ppm MnO$_2$, 4 ppm MoOs, 1 ppm NiO, 3 ppm V$_2$O$_5$.

Tabelle 1: Zusammensetzungen und Eigenschaften kristallisierbarer Gläser

| Glas Nr. | | 1 | 2 | 3 | 4 | 5 | 6 |
|---|---|---|---|---|---|---|---|
| **Zusammensetzung** | Gew.-% | | | | | | |
| Li$_2$O | | 3,68 | 3,23 | 3,27 | 3,25 | 3,32 | 3,29 |
| Na$_2$O | | 0,56 | 0,45 | 0,37 | 0,45 | 0,61 | 0,62 |
| K$_2$O | | 0,09 | 0,58 | 0,36 | 0,58 | 0,30 | 0,30 |
| MgO | | 0,27 | 0,33 | 0,28 | 0,15 | 0,36 | 0,36 |
| CaO | | 0,39 | 0,76 | 0,59 | 0,77 | 0,75 | 0,75 |
| SrO | | 0,05 | | 0,02 | 0,02 | 0,10 | 0,10 |
| BaO | | 0,88 | 1,74 | 1,78 | 1,73 | 1,33 | 1,32 |
| ZnO | | 1,75 | 1,88 | 1,99 | 1,86 | 1,85 | 1,81 |
| Al$_2$O$_3$ | | 21,4 | 21,4 | 21,3 | 21,5 | 21,5 | 21,3 |
| SiO$_2$ | | 66,6 | 65,3 | 65,5 | 65,5 | 65,6 | 65,1 |
| TiO$_2$ | | 2,29 | 2,29 | 2,54 | 2,29 | 2,34 | 2,30 |
| ZrO$_2$ | | 1,83 | 1,83 | 1,83 | 1,83 | 1,83 | 1,81 |
| P$_2$O$_5$ | | 0,03 | 0,03 | 0,03 | | 0,03 | 0,03 |
| SnO$_2$ | | 0,08 | 0,09 | 0,08 | 0,08 | 0,09 | 0,02 |
| Fe$_2$O$_3$ | | 0,014 | 0,014 | 0,014 | 0,013 | 0,014 | 0,014 |
| Nd$_2$O$_3$ | | 0,051 | | | | 0,049 | |
| As$_2$O$_3$ | | | | | | | 0,89 |
| H$_2$O-Gehalt ($\beta$-OH) | mm$^{-1}$ | 0,37 | 0,38 | 0,36 | 0,39 | 0,39 | 0,31 |
| MgO $\times$ SnO$_2$ | | 0,022 | 0,028 | 0,023 | 0,012 | 0,031 | 0,007 |
| TiO$_2$ / SnO$_2$ | | 28,6 | 26,9 | 31,0 | 28,6 | 27,5 | 115,0 |
| Na$_2$O + K$_2$O | | 0,65 | 1,03 | 0,73 | 1,03 | 0,91 | 0,92 |
| SrO + BaO | | 0,93 | 1,74 | 1,80 | 1,75 | 1,43 | 1,42 |
| TiO$_2$ + ZrO$_2$ + SnO$_2$ | | 4,20 | 4,21 | 4,45 | 4,20 | 4,26 | 4,13 |
| Na$_2$O / K$_2$O | | 5,96 | 0,78 | 1,03 | 0,78 | 2,03 | 2,07 |
| **Eigenschaften glasig** | | | | | | | |
| Transformationstemperatur Tg | °C | 685 | 683 | 690 | 692 | 684 | 682 |
| 10$^2$ dPas - Temperatur | °C | 1755 | 1745 | 1737 | 1748 | 1736 | 1733 |
| Verarbeitungstemperatur VA | °C | 1320 | 1316 | 1315 | 1325 | 1316 | 1313 |
| OEG-Temperatur | °C | 1265 | 1275 | 1280 | 1270 | 1255 | 1290 |

(fortgesetzt)

| Eigenschaften glasig | | | | | | | |
|---|---|---|---|---|---|---|---|
| Entglasungsfestigkeit VA - OEG | °C | 55 | 41 | 35 | 55 | 61 | 23 |
| **Glas Nr.** | | | **7** | **8** | **9** | **10** | **11** |
| **Zusammensetzung** | Gew.% | | | | | | |
| $Li_2O$ | | | 3,46 | 3,70 | 4,02 | 3,71 | 3,69 |
| $Na_2O$ | | | 0,57 | 0,54 | 0,54 | 0,53 | 0,58 |
| $K_2O$ | | | 0,41 | 0,16 | 0,16 | 0,16 | 0,09 |
| MgO | | | 0,32 | 0,28 | 0,28 | 0,28 | 0,29 |
| CaO | | | 0,50 | 0,40 | 0,40 | 0,40 | 0,37 |
| SrO | | | 0,10 | 0,05 | 0,05 | 0,05 | 0,10 |
| BaO | | | 1,48 | 0,92 | 0,93 | 0,93 | 0,81 |
| ZnO | | | 1,86 | 1,78 | 0,82 | 1,76 | 1,72 |
| $Al_2O_3$ | | | 21,2 | 21,6 | 21,7 | 21,6 | 21,5 |
| $SiO_2$ | | | 65,7 | 66,2 | 66,1 | 66,2 | 66,5 |
| $TiO_2$ | | | 2,40 | 2,35 | 2,42 | 2,36 | 2,20 |
| $ZrO_2$ | | | 1,83 | 1,83 | 1,83 | 1,83 | 1,83 |
| $P_2O_5$ | | | 0,03 | 0,03 | 0,66 | 0,03 | 0,02 |
| $SnO_2$ | | | 0,08 | 0,045 | 0,043 | 0,069 | 0,12 |
| $Fe_2O_3$ | | | 0,014 | 0,015 | 0,014 | 0,013 | 0,013 |
| $Nd_2O_3$ | | | | 0,049 | | 0,052 | 0,053 |
| $As_2O_3$ | | | | | | | 0,0008 |
| $H_2O$-Gehalt ($\beta$-OH) | $mm^{-1}$ | | 0,43 | 0,40 | 0,37 | 0,45 | 0,42 |
| $MgO \times SnO_2$ | | | 0,027 | 0,013 | 0,012 | 0,019 | 0,035 |
| $TiO_2 / SnO_2$ | | | 28,9 | 52,2 | 56,3 | 34,2 | 18,3 |
| $Na_2O + K_2O$ | | | 0,98 | 0,70 | 0,70 | 0,69 | 0,67 |
| SrO + BaO | | | 1,58 | 0,97 | 0,98 | 0,98 | 0,91 |
| $TiO_2 + ZrO_2 + SnO_2$ | | | 4,31 | 4,23 | 4,29 | 4,26 | 4,15 |
| $Na_2O / K_2O$ | | | 1,39 | 3,38 | 3,38 | 3,31 | 6,44 |
| **Eigenschaften glasig** | | | | | | | |
| Transformationstemperatur Tg | °C | | 680 | 684 | 688 | 683 | 684 |
| $10^2$ dPas - Temperatur | °C | | 1742 | 1742 | 1746 | 1747 | 1749 |
| Verarbeitungstemperatur VA | °C | | 1314 | 1316 | 1321 | 1318 | 1320 |
| OEG-Temperatur | °C | | 1280 | 1275 | 1260 | 1290 | 1280 |
| Entglasungsfestigkeit VA - OEG | °C | | 34 | 41 | 61 | 28 | 40 |

(fortgesetzt)

| | | Vergleichsqläser | | | | | | |
|---|---|---|---|---|---|---|---|---|
| Glas Nr. | | 12 | 13 | 14 | 15 | 16 | 17 | 18 |
| Zusammensetzung | Gew.-% | | | | | | | |
| Li$_2$O | | 3,77 | 4,06 | 3,73 | 3,67 | 3,59 | 3,54 | 3,66 |
| Na$_2$O | | 0,38 | 0,27 | 0,17 | 0,50 | 0,48 | | 0,56 |
| K$_2$O | | 0,29 | 0,71 | 0,11 | 0,11 | 0,11 | 0,38 | 0,09 |
| MgO | | 0,73 | 0,30 | 0,35 | 0,63 | 0,61 | | 0,77 |
| CaO | | | 0,43 | 0,39 | 0,24 | 0,24 | | 0,39 |
| SrO | | | | 0,20 | 0,51 | 0,51 | 0,23 | 0,05 |
| BaO | | 1,18 | 1,21 | 1,09 | 0,52 | 0,51 | 1,95 | 0,87 |
| ZnO | | | 0,20 | 1,70 | 1,62 | 1,64 | 1,73 | 1,74 |
| Al$_2$O$_3$ | | 22,0 | 23,60 | 21,4 | 20,9 | 20,5 | 19,7 | 21,3 |
| SiO$_2$ | | 65,7 | 64,2 | 66,5 | 65,1 | 67,7 | 68,4 | 66,2 |
| TiO$_2$ | | 2,07 | 2,76 | 2,26 | 2,19 | 2,14 | 2,06 | 2,28 |
| ZrO$_2$ | | 2,23 | 1,86 | 1,81 | 1,79 | 1,76 | 1,86 | 1,82 |
| P$_2$O$_5$ | | 1,47 | 0,03 | 0,03 | 2,06 | 0,03 | | 0,03 |
| SnO$_2$ | | 0,12 | 0,30 | 0,29 | 0,12 | 0,12 | 0,14 | 0,08 |
| Fe$_2$O$_3$ | | 0,014 | 0,012 | 0,015 | 0,014 | 0,014 | 0,012 | 0,014 |
| Nd$_2$O$_3$ | | | | | | | | 0,051 |
| As$_2$O$_3$ | | | | | | | | |
| H$_2$O-Gehalt (β-OH) | mm$^{-1}$ | 0,36 | nicht gem. | 0,40 | 0,40 | 0,41 | 0,36 | nicht gem. |
| MgO $\times$ SnO$_2$ | | 0,088 | 0,090 | 0,102 | 0,076 | 0,073 | 0,000 | 0,061 |
| TiO$_2$ / SnO$_2$ | | 17,3 | 9,2 | 7,8 | 18,3 | 17,8 | 14,7 | 28,6 |
| Na$_2$O + K$_2$O | | 0,67 | 0,98 | 0,28 | 0,61 | 0,59 | 0,38 | 0,65 |
| SrO + BaO | | 1,18 | 1,21 | 1,29 | 1,03 | 1,02 | 2,18 | 0,92 |
| TiO$_2$ + ZrO$_2$ + SnO$_2$ | | 4,42 | 4,92 | 4,36 | 4,10 | 4,02 | 4,06 | 4,17 |
| Na$_2$O / K$_2$O | | 1,31 | 0,38 | 1,55 | 4,55 | 4,36 | 0,00 | 6,22 |
| Eigenschaften glasig | | | | | | | | |
| Transformationstemperatur Tg | °C | 705 | 692 | 693 | 682 | 685 | 693 | 680 |
| 10$^2$ dPas- Temperatur | °C | 1765 | 1718 | 1751 | 1756 | 1774 | 1839 | 1733 |
| Verarbeitungstemperatur VA | °C | 1334 | 1305 | 1318 | 1318 | 1332 | 1358 | 1307 |
| OEG-Temperatur | °C | 1345 | 1330 | 1315 | 1255 | 1305 | 1315 | 1240 |
| Entglasungsfestigkeit VA - OEG | °C | -11 | -25 | 3 | 63 | 27 | 43 | 67 |

Tabelle 2: Keramisierungsbedingungen und Eigenschaften der Glaskeramiken mit Hochquarz-Mischkristallen als Hauptkristallphase

| Beispiel Nr. | | 1 | 2 | 3 | 4 | 5 | 6 | 7 |
|---|---|---|---|---|---|---|---|---|
| **Glas Nr.** | | **1** | **1** | **2** | **3** | **4** | **5** | **6** |
| **Keramisierungsprogramm** | | 1 | 2 | 1 | 1 | 1 | 1 | 2 |
| **Eigenschaften keramisiert** | | | | | | | | |
| **Transmission Normlicht D65, 2° 4 mm Dicke** | | | | | | | | |
| 400 nm | % | 75,5 | 75,0 | 73,6 | 73,5 | 74,0 | 74,1 | 77,7 |
| 1600 nm | % | 89,4 | 89,7 | 89,6 | 89,7 | 89,8 | 89,7 | 90,2 |
| Lichttransmission Y | % | 85,9 | 86,4 | 86,4 | 86,1 | 86,1 | 85,5 | 89,4 |
| L* | | 94,3 | 94,5 | 94,5 | 94,4 | 94,3 | 94,1 | 95,7 |
| a* | | 0,0 | -0,1 | 0,0 | 0,0 | 0,0 | -0,1 | -0,4 |
| b* | | 2,6 | 2,7 | 4,0 | 3,9 | 3,9 | 3,1 | 3,0 |
| c* | | 2,6 | 2,7 | 4,0 | 3,9 | 3,9 | 3,1 | 3,0 |
| **Streuung Normlicht C 4 mm Dicke** | | | | | | | | |
| haze | % | 1,8 | 1,6 | 0,8 | 2,1 | 1,7 | 0,7 | |
| **therm Ausdehnung $\alpha_{20/700}$** | $10^{-6}$/K | *nicht gem.* | -0,39 | 0,25 | 0,0 | 0,15 | 0,19 | 0,20 |
| **Röntgenbeugung** | | | | | | | | |
| HOMK-Phasengehalt | % | *nicht gem.* | 72 | 63 | 67 | 64 | 65 | 67 |
| mittlere Kristallitgröße | nm | *nicht gem.* | 42 | 45 | 41 | 39 | 41 | 44 |
| **Beispiel Nr.** | | **8** | **9** | **10** | **11** | **12** | **13** | |
| **Glas Nr.** | | **7** | **8** | **8** | **9** | **10** | **11** | |
| **Keramisierungsprogramm** | | 1 | 1 | 2 | 2 | 2 | 2 | |
| **Eigenschaften keramisiert** | | | | | | | | |
| **Transmission Normlicht D65, 2° 4 mm Dicke** | | | | | | | | |
| 400 nm | % | 69,8 | 77,2 | 75,5 | 76,6 | 73,5 | *70,6* | |
| 1600 nm | % | 89,7 | 88,7 | 88,0 | 89,1 | 89,3 | 89,5 | |
| Lichttransmission Y | % | 85,8 | 85,7 | 84,9 | 86,5 | 85,9 | 84,7 | |
| L* | | 94,2 | 94,2 | 93,9 | 94,5 | 94,3 | 93,7 | |
| a* | | -0,2 | 0,0 | -0,1 | 0,1 | -0,2 | *-0,1* | |
| b* | | 4,6 | 2,3 | 2,6 | 3,0 | 2,9 | *3,1* | |
| c* | | 4,6 | 2,3 | 2,6 | 3,0 | 2,9 | *3,1* | |
| **Streuung Normlicht C 4 mm Dicke** | | | | | | | | |
| haze | % | 1,5 | 1,5 | 1,2 | 0,5 | 0,9 | 1,0 | |
| **therm Ausdehnung $\alpha_{20/700}$** | $10^{-6}$/K | 0,14 | *nicht gem.* | -0,30 | -0,34 | -0,26 | -0,41 | |

(fortgesetzt)

| Röntgenbeugung | | | | | | | | |
|---|---|---|---|---|---|---|---|---|
| HQMK-Phasengehalt | % | 66 | nicht gem. | 72 | 72 | 68 | 73 | |
| mittlere Kristallitgröße | nm | 38 | nicht gem. | 37 | 40 | 37 | 39 | |
| | | **Vergleichsbeispiele** | | | | | | |
| **Beispiel Nr.** | | **14** | **15** | **16** | **17** | **18** | **19** | **20** |
| **Glas Nr.** | | **12** | **13** | **14** | **15** | **16** | **17** | **18** |
| **Keramisierungsprogramm** | | 1 | 1 | 2 | 2 | 2 | 2 | 1 |
| **Eigenschaften keramisiert** | | | | | | | | |
| **Transmission Normlicht D65, 2° 4 mm Dicke** | | | | | | | | |
| 400 nm | % | 71,9 | 68,5 | 60,3 | 63,0 | 67,2 | 73,0 | 71,6 |
| 1600 nm | % | 89,2 | 89,9 | 88,1 | 88,7 | 89,0 | 89,9 | 89,5 |
| Lichttransmission Y | % | 86,5 | 86,5 | 85,3 | 84,8 | 84,9 | 87,9 | 85,5 |
| L* | | 94,5 | 94,5 | 94,0 | 93,8 | 93,8 | 95,1 | 94,1 |
| a* | | -0,1 | -0,4 | -0,7 | -0,5 | -0,3 | -0,4 | -0,2 |
| b* | | 4,4 | 4,2 | 5,2 | 5,1 | 4,7 | 3,5 | 3,2 |
| c* | | 4,4 | 4,2 | 5,2 | 5,1 | 4,7 | 3,5 | 3,2 |
| **Streuung Normlicht C 4 mm Dicke** | | | | | | | | |
| haze | % | 3,6 | 0,7 | 2,4 | 1,3 | 0,7 | 4,3 | 0,7 |
| **therm Ausdehnung $\alpha_{20/700}$** | $10^{-6}$/K | 0,03 | 0,20 | -0,45 | -0,13 | -0,20 | -0,66 | 0,09 |
| **Röntgenbeugung** | | | | | | | | |
| HQMK-Phasengehalt | % | 76 | 68 | 77 | 75 | 71 | 74 | 69 |
| mittlere Kristallitgröße | nm | 45 | 42 | 39 | 37 | 36 | 32 | 36 |

Tabelle 3: Keramisierungsbedingungen und Eigenschaften der Glaskeramiken mit Keatit-Mischkristallen als Hauptkristallphase

| **Beispiel Nr.** | | **21** | **22** |
|---|---|---|---|
| **Glas Nr.** | | **10** | **10** |
| **Aussehen** | | transluzent | transluzent bis opak |
| **Keramisierungsprogramm** | | 3 | 3 |
| Tmax | °C | 1100 | 1145 |
| tmax | min | 15 | 15 |
| **Eigenschaften keramisiert** | | | |
| **Transmission Normlicht D65, 2°, 4 mm Dicke** | | | |
| 400 nm | % | 1,4 | 0,2 |
| 1600 nm | % | 84,5 | 79,7 |
| Lichttransmission Y | % | 22,5 | 7,7 |

(fortgesetzt)

| Eigenschaften keramisiert | | | |
|---|---|---|---|
| **Transmission Normlicht D65**, 2°, **4 mm Dicke** | | | |
| L* | | 54,6 | 33,3 |
| a* | | 8,7 | 8,1 |
| b* | | 32,1 | 31,7 |
| c* | | 33,3 | 32,7 |
| **Remission Normlicht D65, 2°, 4 mm Dicke** | | | |
| 400 nm | % | 36,5 | 49,4 |
| 1600 nm | % | 9,1 | 9,9 |
| Lichttransmission Y | % | 29,9 | 51,3 |
| L* | | 61,6 | 76,9 |
| a* | | -4,2 | -2,8 |
| b* | | -13,5 | -6,3 |
| c* | | 14,1 | 6,9 |
| **therm Ausdehnung $\alpha$ 20/700** | $10^{-6}$/K | 1,2 | 1,2 |
| **Röntgenbeugung** | | | |
| Keatit-Phasengehalt | % | 85 | 87 |
| mittlere Kristallitgröße Keatit | nm | > 120 | > 120 |

## Patentansprüche

1. Kristallisierbares Lithiumaluminiumsilikat-Glas für die Herstellung transparenter Glaskeramiken, **dadurch gekennzeichnet, dass** es folgende Komponenten (in Gew.-% auf Oxidbasis) enthält:

   $Li_2O$ 3 - 5
   $Al_2O_3$ 19 - 24
   $SiO_2$ 62 - 70
   $TiO_2$ >1,6 - 2,8
   $ZrO_2$ 1 - 2,5
   MgO 0,01 - < 0,5
   $SnO_2$ 0,01 - < 0,15
   mit der Bedingung: (dabei beide in Gew.-%):
   0,005 < MgO $\times$ $SnO_2$ < 0,06 (Bedingung B1a),
   wobei das Glas bis auf unvermeidliche Verunreinigungen keine weiteren färbenden Verbindungen enthält, wie Ce, Cr, Ni, Cu, V, Mo, W und/oder S, die zu einer gelben, orangen oder roten Einfärbung führen.

2. Kristallisierbares Lithiumaluminiumsilikat-Glas nach Anspruch 1,
   **dadurch gekennzeichnet,**
   **dass** für das Produkt der Komponenten MgO und $SnO_2$ gilt:

$$0,01 < MgO \times SnO_2 < 0,05 \text{ (Bedingung B1b).}$$

3. Kristallisierbares Lithiumaluminiumsilikat-Glas nach mindestens einem der vorhergehenden Ansprüche, **dadurch gekennzeichnet,**
   **dass** für die Komponenten $TiO_2$ und $SnO_2$ gilt:

$$18 \leq TiO_2 / SnO_2 \leq 200 \text{ (Bedingung B2).}$$

4. Kristallisierbares Lithiumaluminiumsilikat-Glas nach mindestens einem der vorhergehenden Ansprüche, **dadurch gekennzeichnet, dass** für die Keimbildner 3,8 Gew.-% $\leq TiO_2 + ZrO_2 + SnO_2 \leq$ 4,8 Gew.-% (Bedingung B3) gilt.

5. Kristallisierbares Lithiumaluminiumsilikat-Glas nach einem der Ansprüche 1 bis 4, **dadurch gekennzeichnet, dass** es $Na_2O$ mit einem Anteil von 0,1 Gew.-% bis 1,5 Gew.-% enthält.

6. Kristallisierbares Lithiumaluminiumsilikat-Glas nach mindestens einem der Ansprüche 1 bis 5, **dadurch gekennzeichnet, dass** es $K_2O$ mit einem Anteil von 0,1 Gew.-% bis 1,5 Gew.-% enthält.

7. Kristallisierbares Lithiumaluminiumsilikat-Glas nach Anspruch 6, **dadurch gekennzeichnet, dass**

$$0,2 \text{ Gew.-\%} \leq Na_2O + K_2O \leq 1,5 \text{ Gew.-\% (Bedingung B4a) gilt.}$$

gilt.

8. Kristallisierbares Lithiumaluminiumsilikat-Glas nach Anspruch 6, **dadurch gekennzeichnet, dass**

$$1 \leq Na_2O / K_2O \leq 10 \text{ (Bedingung B5) gilt.}$$

gilt.

9. Kristallisierbares Lithiumaluminiumsilikat-Glas nach mindestens einem der vorherigen Ansprüche, **dadurch gekennzeichnet, dass** es CaO mit einem Anteil von 0,05 Gew.-% bis 2 Gew.-% enthält.

10. Kristallisierbares Lithiumaluminiumsilikat-Glas nach mindestens einem der vorhergehenden Ansprüche, **dadurch gekennzeichnet, dass** es BaO mit einem Anteil von 0,2 Gew.-% bis 2,5 Gew.-% enthält.

11. Kristallisierbares Lithiumaluminiumsilikat-Glas nach mindestens einem der vorhergehenden Ansprüche, **dadurch gekennzeichnet, dass** es SrO mit einem Anteil von 0,01 Gew.-% bis 2 Gew.-% enthält.

12. Kristallisierbares Lithiumaluminiumsilikat-Glas nach Anspruch 11, **dadurch gekennzeichnet, dass** 0,5 Gew.-% $\leq$ SrO + BaO $\leq$ 2,5 Gew.-% (Bedingung B6) gilt.

13. Kristallisierbares Lithiumaluminiumsilikat-Glas nach mindestens einem der vorhergehenden Ansprüche, **dadurch gekennzeichnet,**
**dass** das Glas technisch frei ist von Arsen- und Antimonoxid.

14. Kristallisierbares Lithiumaluminiumsilikat-Glas nach mindestens einem der vorhergehenden Ansprüche, **dadurch gekennzeichnet,**
**dass** es $Nd_2O_3$ mit einem Anteil von 0,005 Gew.-% bis 0,5 Gew.-% enthält.

15. Kristallisierbares Lithiumaluminiumsilikat-Glas nach Anspruch 1,
**dadurch gekennzeichnet,**
**dass** es folgende Komponenten (in Gew.-% auf Oxidbasis) enthält:

$Li_2O$ 3,2 - < 4,5
$Al_2O_3$ 19 - 23
$SiO_2$ 62 - 68
$Na_2O$ 0 - 1
$K_2O$ 0 - 1
$Na_2O + K_2O$ 0,2 - 1,5 (Bedingung B4a)
MgO 0,05 - < 0,5

CaO 0,05 - 2
TiO$_2$ 1,8 - 2,8
ZrO$_2$ 1 - < 2,2
SnO$_2$ 0,01 - < 0,12
TiO$_2$ + ZrO$_2$ + SnO$_2$ 3,8 - 4,8 (Bedingung B3)
Fe$_2$O$_3$ 0,008 - 0,025

mit

$$0{,}005 < MgO \times SnO_2 < 0{,}06 \text{ (Bedingung B1a)}$$

16. Kristallisierbares Lithiumaluminiumsilikat-Glas nach Anspruch 1, **dadurch gekennzeichnet, dass** es folgende Komponenten (in Gew.-% auf Oxidbasis) enthält:

Li$_2$O 3,2 - < 4,2
Al$_2$O$_3$ 20 - 23
SiO$_2$ 62 - 68
Na$_2$O 0,1 -1
K$_2$O 0 - 1
Na$_2$O + K$_2$O 0,2 - 1,2 (Bedingung B4b)
MgO 0,1 - 0,4
CaO 0,05 - 1
SrO 0-1,5
BaO 0 - 2,5
SrO + BaO 0,5 - 2,5 (Bedingung B6)
ZnO 0 - 2,5
B$_2$O$_3$ 0-1
TiO$_2$ 1,8 - 2,8
ZrO$_2$ 1 - < 2,2
SnO$_2$ 0,01 - < 0,10
TiO$_2$ + ZrO$_2$ + SnO$_2$ 3,8 - 4,8 (Bedingung B3)
P$_2$O$_5$ 0 - 2
Fe$_2$O$_3$ 0,008 - 0,02

mit

$$0{,}005 < MgO \times SnO_2 < 0{,}06 \text{ (Bedingung B1a)}$$

17. Kristallisierbares Lithiumaluminiumsilikat-Glas nach mindestens einem der vorhergehenden Ansprüche, **gekennzeichnet durch**

   • eine 10$^2$ dPas - Temperatur von weniger als 1760 °C und/oder
   • eine Verarbeitungstemperatur V$_A$ von höchstens 1330 °C und/oder
   • eine obere Entglasungsgrenze OEG, die mindestens 15 °C unter der Verarbeitungstemperatur V$_A$ liegt.

18. Glaskeramik hergestellt aus einem Lithiumaluminiumsilikat-Glas nach einem der Ansprüche 1 bis 17 durch einen mehrstufigen Temperaturprozess.

19. Glaskeramik nach Anspruch 18, **dadurch gekennzeichnet, dass** sie für 4 mm Dicke eine Helligkeit Y von größer als 83 % und/oder eine Farbe c* von höchstens 4 und/oder einen Haze-Wert < 2,5 % besitzt.

20. Verfahren zur Herstellung eines kristallisierbaren Lithiumaluminiumsilikat-Glases nach einem der Ansprüche 1 bis 17, **gekennzeichnet durch** die Schritte:

   a) Bereitstellen eines Gemengesatzes aus technischen Rohstoffen;
   b) Schmelzen des Gemengesatzes und Hochtemperaturläutern bei Temperaturen größer 1750 °C;

c) Abkühlen der Glasschmelze und Formgebung bei Temperaturen in der Nähe der Verarbeitungstemperatur $V_A$, und

d) Abkühlen in einem Entspannungsofen auf Raumtemperatur.

21. Verfahren zur Herstellung einer Glaskeramik nach einem der Ansprüche 18 oder 19, **dadurch gekennzeichnet, dass** die Keramisierung mit folgenden Verfahrensschritten durchgeführt wird:

a) Erhöhen der Temperatur des kristallisierbaren Glases auf eine Temperatur $T_a$ im Bereich von 660 bis 730 °C innerhalb von 3 bis 60 Minuten;

b) Erhöhen der Temperatur des kristallisierbaren Glases innerhalb des Temperaturbereichs der Keimbildung von $T_a$ bis 800 °C über einen Zeitraum von etwa 10 bis 100 Minuten;

c) Erhöhen der Temperatur des Kristallisationskeime enthaltenden Glases innerhalb von 5 bis 80 Minuten Dauer in den Temperaturbereich hoher Kristallwachstumsgeschwindigkeit von 850 bis 950°C;

d) Halten bei einer maximalen Temperatur innerhalb des Temperaturbereiches von 850 bis 950°C über 0 bis 60 Minuten, wobei Kristalle des Typs Hochquarz-Mischkristalle auf den Kristallisationskeimen wachsen, und danach;

e) rasches Abkühlen der erhaltenen Glaskeramik auf Raumtemperatur in weniger als 150 Minuten,

wobei die Keramisierung des Glases eine Gesamtdauer von weniger als 300 min aufweist.

22. Verwendung einer transparenten Glaskeramik nach Anspruch 18 oder 19, die in Form einer Platte mit einer Dicke von 2mm bis 20mm vorliegt, als Brandschutzglas, Kaminsichtscheibe, Backofensichtscheibe, Kochfläche, Abdeckung im Beleuchtungssektor, Sicherheitsglasscheibe, Trägerplatte oder Ofenauskleidung.

**Claims**

1. Crystallizable lithium aluminium silicate glass for producing transparent glass-ceramics, **characterized in that** it comprises the following components (in wt% on an oxide basis):

$Li_2O$ 3 - 5
$Al_2O_3$ 19 - 24
$SiO_2$ 62 - 70
$TiO_2$ > 1.6 - 2.8
$ZrO_2$ 1 - 2.5
MgO 0.01 - < 0.5
$SnO_2$ 0.01 - < 0.15

with the following condition: (both in wt%):

$$0.005 < MgO \times SnO_2 < 0.06 \text{ (condition B1a)},$$

where the glass does not contain, apart from unavoidable impurities, any further colouring compounds, such as Ce, Cr, Ni, Cu, V, Mo, W and/or S, that lead to a yellow, orange or red colour.

2. Crystallizable lithium aluminium silicate glass according to Claim 1,
**characterized in that**
for the product of the components MgO and $SnO_2$:

$$0.01 < MgO \times SnO_2 < 0.05 \text{ (condition B1b)}.$$

3. Crystallizable lithium aluminium silicate glass according to at least one of the preceding claims, **characterized in that** for the components $TiO_2$ and $SnO_2$:

$$18 \leq TiO_2 / SnO_2 \leq 200 \text{ (condition B2)}.$$

4. Crystallizable lithium aluminium silicate glass according to at least one of the preceding claims, **characterized in that** for the nucleating agents: 3.8 wt% $\leq$ TiO$_2$ + ZrO$_2$ + SnO$_2$ $\leq$ 4.8 wt% (condition B3).

5. Crystallizable lithium aluminium silicate glass according to any of Claims 1 to 4, **characterized in that** it comprises Na$_2$O with a fraction of 0.1 wt% to 1.5 wt%.

6. Crystallizable lithium aluminium silicate glass according to at least one of Claims 1 to 5, **characterized in that** it comprises K$_2$O with a fraction of 0.1 wt% to 1.5 wt%.

7. Crystallizable lithium aluminium silicate glass according to Claim 6, **characterized in that** 0.2 wt% $\leq$ Na$_2$O + K$_2$O $\leq$ 1.5 wt% (condition B4a).

8. Crystallizable lithium aluminium silicate glass according to Claim 6, **characterized in that** 1 $\leq$ Na$_2$O / K$_2$O $\leq$ 10 (condition B5).

9. Crystallizable lithium aluminium silicate glass according to at least one of the preceding claims, **characterized in that** it comprises CaO with a fraction of 0.05 wt% to 2 wt%.

10. Crystallizable lithium aluminium silicate glass according to at least one of the preceding claims, **characterized in that** it comprises BaO with a fraction of 0.2 wt% to 2.5 wt%.

11. Crystallizable lithium aluminium silicate glass according to at least one of the preceding claims, **characterized in that** it comprises SrO with a fraction of 0.01 wt% to 2 wt%.

12. Crystallizable lithium aluminium silicate glass according to Claim 11, **characterized in that**

$$0.5 \; wt\% \; \leq \; SrO \; + \; BaO \; \leq \; 2.5 \; wt\% \; (condition \; B6).$$

13. Crystallizable lithium aluminium silicate glass according to at least one of the preceding claims, **characterized in that** the glass is technically free from arsenic oxide and antimony oxide.

14. Crystallizable lithium aluminium silicate glass according to at least one of the preceding claims, **characterized in that** it comprises Nd$_2$O$_3$ with a fraction of 0.005 wt% to 0.5 wt%.

15. Crystallizable lithium aluminium silicate glass according to Claim 1,
**characterized in that**
it comprises the following components (in wt% on an oxide basis):

Li$_2$O 3.2 - < 4.5
Al$_2$O$_3$ 19 - 23
SiO$_2$ 62 - 68
Na$_2$O 0 - 1
K$_2$O 0 - 1
Na$_2$O + K$_2$O 0.2 - 1.5 (condition B4a) MgO 0.05 - < 0.5
CaO 0.05 - 2
TiO$_2$ 1.8 - 2.8
ZrO$_2$ 1 - < 2.2
SnO$_2$ 0.01 - < 0.12
TiO$_2$ + ZrO$_2$ + SnO$_2$ 3.8 - 4.8 (condition B3) Fe$_2$O$_3$ 0.008 - 0.025

with

$$0.005 \; < \; MgO \; \times \; SnO_2 \; < \; 0.06 \; (condition \; B1a).$$

16. Crystallizable lithium aluminium silicate glass according to Claim 1, **characterized in that** it comprises the following components (in wt% on an oxide basis):

$Li_2O$ 3.2 - < 4.2
$Al_2O_3$ 20 - 23
$SiO_2$ 62 - 68
$Na_2O$ 0.1 - 1
$K_2O$ 0 - 1
$Na_2O + K_2O$ 0.2 - 1.2 (condition B4b)
MgO 0.1 - 0.4
CaO 0.05 - 1
SrO 0 - 1.5
BaO 0 - 2.5
SrO + BaO 0.5 - 2.5 (condition B6)
ZnO 0 - 2.5
$B_2O_3$ 0 - 1
$TiO_2$ 1.8 - 2.8
$ZrO_2$ 1 - < 2.2
$SnO_2$ 0.01 - < 0.10
$TiO_2 + ZrO_2 + SnO_2$ 3.8 - 4.8 (condition B3)
$P_2O_5$ 0 - 2
$Fe_2O_3$ 0.008 - 0.02

with

$$0.005 < MgO \times SnO_2 < 0.06 \text{ (condition B1a)}.$$

17. Crystallizable lithium aluminium silicate glass according to at least one of the preceding claims, **characterized by**

- a $10^2$ dPas temperature of less than 1760°C and/or
- a processing temperature $V_A$ of at most 1330°C and/or
- an upper devitrification limit UDL which is at least 15°C below the processing temperature $V_A$.

18. Glass-ceramic produced from a lithium aluminium silicate glass according to any of Claims 1 to 17 by a multi-stage temperature operation.

19. Glass-ceramic according to Claim 18, **characterized in that** for a 4 mm thickness it possesses a brightness Y of greater than 83% and/or a colour c* of at most 4 and/or a haze < 2.5%.

20. Method for producing a crystallizable lithium aluminium silicate glass according to any of Claims 1 to 17, **characterized by** the steps of:

a) providing a batch mix of technical raw materials;
b) melting the batch mix and high-temperature refining at temperatures greater than 1750°C;
c) cooling the glass melt and shaping at temperatures in the vicinity of the processing temperature $V_A$, and
d) cooling in an annealing lehr to room temperature.

21. Method for producing a glass-ceramic according to either of Claims 18 and 19, **characterized in that** the ceramization is carried out with the following method steps:

a) increasing the temperature of the crystallizable glass to a temperature $T_a$ in the range from 660°C to 730°C within from 3 to 60 minutes;
b) increasing the temperature of the crystallizable glass within the temperature range of nucleation from $T_a$ to 800°C over a period of about 10 to 100 minutes;
c) increasing the temperature of the glass containing crystallization nuclei within from 5 to 80 minutes' duration into the temperature range of high crystal growth rate of 850°C to 950°C;
d) holding at a maximum temperature within the temperature range of 850°C to 950°C over 0 up to 60 minutes, where crystals of the high-quartz solid solution type grow on the crystallization nuclei, and then
e) rapidly cooling the resulting glass-ceramic to room temperature in less than 150 minutes,

where the ceramization of the glass has a total duration of less than 300 min.

**22.** Use of a transparent glass-ceramic according to Claim 18 or 19 in the form of a sheet having a thickness of 2 mm to 20 mm as fire protection glass, stove sightglass, oven sightglass, hob, cover in the lighting sector, safety glass sheet, support plate or oven lining.

**Revendications**

**1.** Verre aluminosilicate de lithium cristallisable pour la fabrication de vitrocéramiques transparentes, **caractérisé en ce qu'**il contient les composants suivants (en % en poids sur la base des oxydes) :

$Li_2O$ 3 - 5
$Al_2O_3$ 19 - 24
$SiO_2$ 62 - 70
$TiO_2$ > 1,6 - 2,8
$ZO_2$ 1 - 2,5
MgO 0,01 - < 0,5
$SnO_2$ 0,01 - < 0,15

avec la condition : (où les deux sont en % en poids) :

$$0,005 < MgO \times SnO_2 < 0,06) \ (condition \ B1a),$$

hormis les impuretés inévitables le verre ne contenant pas d'autres composés colorants, tels que Ce, Cr, Ni, Cu, V, Mo, W et/ou S qui conduisent à une coloration jaune, orangée ou rouge.

**2.** Verre aluminosilicate de lithium cristallisable selon la revendication 1, **caractérisé en ce que** pour le produit des composants MgO et $SnO_2$ il s'applique que :

$$0,01 < MgO \times SnO_2 < 0,05 \ (condition \ B1b).$$

**3.** Verre aluminosilicate de lithium cristallisable selon au moins l'une des revendications précédentes, **caractérisé en ce que** pour les composants $TiO_2$ et $SnO_2$ il s'applique que :

$$18 \leq TiO_2 / SnO_2 \leq 200 \ (condition \ B2).$$

**4.** Verre aluminosilicate de lithium cristallisable selon au moins l'une des revendications précédentes, **caractérisé en ce que** pour les agents de nucléation il s'applique que :
3,8 % en poids $\leq TiO_2 + ZrO_2 + SnO_2 \leq$ 4,8 % en poids (condition B3).

**5.** Verre aluminosilicate de lithium cristallisable selon l'une quelconque des revendications 1 à 4, **caractérisé en ce qu'**il contient du $Na_2O$ en une proportion de 0,1 % en poids à 1,5 % en poids.

**6.** Verre aluminosilicate de lithium cristallisable selon au moins l'une des revendications 1 à 5, **caractérisé en ce qu'**il contient du $K_2O$ en une proportion de 0,1 % en poids à 1,5 % en poids.

**7.** Verre aluminosilicate de lithium cristallisable selon la revendication 6, **caractérisé en ce qu'**il s'applique que 0,2 % en poids $\leq Na_2O + K_2O \leq$ 1,5 % en poids (condition B4a).

**8.** Verre aluminosilicate de lithium cristallisable selon la revendication 6, **caractérisé en ce qu'**il s'applique que

$$1 \leq Na_2O\ /\ K_2O \leq 10\ \text{(condition B5)}.$$

9. Verre aluminosilicate de lithium cristallisable selon au moins l'une des revendications précédentes, **caractérisé en ce qu'**il contient du CaO en une proportion de 0,05 % en poids à 2 % en poids.

10. Verre aluminosilicate de lithium cristallisable selon au moins l'une des revendications précédentes, **caractérisé en ce qu'**il contient du BaO en une proportion de 0,2 % en poids à 2,5 % en poids.

11. Verre aluminosilicate de lithium cristallisable selon au moins l'une des revendications précédentes, **caractérisé en ce qu'**il contient du SrO en une proportion de 0,01 % en poids à 2 % en poids.

12. Verre aluminosilicate de lithium cristallisable selon la revendication 11, **caractérisé en ce qu'**il s'applique que 0,5 % en poids $\leq$ SrO + BaO $\leq$ 2,5 % en poids (condition B6).

13. Verre aluminosilicate de lithium cristallisable selon au moins l'une des revendications précédentes, **caractérisé en ce que**
le verre est techniquement exempt d'oxyde d'arsenic et d'oxyde d'antimoine.

14. Verre aluminosilicate de lithium cristallisable selon au moins l'une des revendications précédentes, **caractérisé en ce qu'**il contient du $Nd_2O_3$ en une proportion de 0,005 % en poids à 0,5 % en poids.

15. Verre aluminosilicate de lithium cristallisable selon la revendication 1,
caractérisé en
qu'il contient les composants suivants (en % en poids sur la base des oxydes) :

$Li_2O$ 3,2 - < 4,5
$Al_2O_3$ 19 - 23
$SiO_2$ 62 - 68
$Na_2O$ 0 - 1
$K_2O$ 0 - 1
$Na_2O$ + $K_2O$ 0,2 - 1,5 (condition B4a)
MgO 0,05 - < 0,5
CaO 0,05 - 2
$TiO_2$ 1,8 - 2,8
$ZrO_2$ 1 - < 2,2
$SnO_2$ 0,01 - < 0,12
$TiO_2$ + $ZrO_2$ + $SnO_2$ 3,8 - 4,8 (condition B3)
$Fe_2O_3$ 0,008 - 0,025

avec

$$005 < MgO \times SnO_2 < 0,06\ \text{(condition B1a)}.$$

16. Verre aluminosilicate de lithium cristallisable selon la revendication 1, **caractérisé en ce qu'**il contient les composants suivants (en % en poids sur la base des oxydes) :

$Li_2O$ 3,2 - < 4,2
$Al_2O_3$ 20 - 23
$SiO_2$ 62 - 68
$Na_2O$ 0,1 - 1
$K_2O$ 0 - 1
$Na_2O$ + $K_2O$ 0,2 - 1,2 (condition B4b)
MgO 0,1 - 0,4
CaO 0,05 - 1
SrO 0 - 1,5
BaO 0 - 2,5

SrO + BaO 0,5 - 2,5 (condition B6)
ZnO 0 - 2,5
$B_2O_3$ 0 - 1
$TiO_2$ 1,8 - 2,8
$ZrO_2$ 1 - < 2,2
$SnO_2$ 0,01 - < 0,10
$TiO_2$ + $ZrO_2$ + $SnO_2$ 3,8 - 4,8 (condition B3)
$P_2O_5$ 0 - 2
$Fe_2O_3$ 0,008 - 0,02

avec

$$0,005 < MgO \times SnO_2 < 0,06 \text{ (condition B1a)}.$$

**17.** Verre aluminosilicate de lithium cristallisable selon au moins l'une des revendications précédentes, **caractérisé par**

- une température à $10^2$ dPa.s de moins de 1 760 °C et/ou
- une température de travail $V_A$ d'au maximum 1 330 °C et/ou
- une limite supérieure de dévitrification OEG qui se situe à au moins 15 °C au-dessous de la température de travail $V_A$.

**18.** Vitrocéramique produite à partir d'un verre aluminosilicate de lithium selon l'une quelconque des revendications 1 à 17 par un processus thermique à plusieurs stades.

**19.** Vitrocéramique selon la revendication 18, **caractérisée en ce qu'**elle présente pour une épaisseur de 4 mm une clarté Y de plus de 83 % et/ou une couleur c* d'au maximum 4 et/ou une valeur de trouble < 2,5 %.

**20.** Procédé pour la fabrication d'un verre aluminosilicate de lithium cristallisable selon l'une quelconque des revendications 1 à 17, **caractérisé par** les étapes :

a) fourniture d'un mélange de charge à base de matières premières industrielles :
b) fusion du mélange de charge et affinage à haute température, à des températures supérieures à 1 750 °C ;
c) refroidissement du bain de verre et mise en forme à des températures au voisinage de la température de travail $V_A$, et
d) refroidissement jusqu'à la température ambiante dans un four de détente.

**21.** Procédé pour la fabrication d'une vitrocéramique selon l'une quelconque des revendications 18 et 19, **caractérisé en ce que** la céramisation est effectuée par les étapes suivantes de processus :

a) élévation de la température du verre cristallisable jusqu'à une température $T_a$ dans la plage de 660 à 730 °C en l'espace de 3 à 60 minutes ;
b) élévation de la température du verre cristallisable à l'intérieur de la plage de température de la nucléation de $T_a$ à 800 °C en un espace de temps d'environ 10 à 100 minutes ;
c) élévation de la température du verre contenant des germes de cristallisation en une durée de 5 à 80 minutes, dans la plage de température de grande vitesse de croissance des cristaux de 850 à 950 °C ;
d) maintien à une température maximale dans la plage de température de 850 à 950 °C pendant 0 à 60 minutes, avec croissance de cristaux du type cristaux mixtes à forte proportion de quartz sur les germes de cristallisation, et ensuite ;
e) rapide refroidissement jusqu'à la température ambiante en moins de 150 minutes de la vitrocéramique obtenue,

la céramisation du verre ayant une durée totale de moins de 300 min.

**22.** Utilisation d'une vitrocéramique transparente selon la revendication 12 ou 19, qui se présente sous forme d'une plaque ayant une épaisseur de 2 mm à 20 mm, en tant que verre coupe-feu, vitre de cheminée, vitre de four de cuisson, surface de cuisson, couvercle dans le secteur de l'éclairage, vitrage de sécurité, plaque de support ou revêtement de four.

Figur 1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008065167 A1
- WO 2008065166 A1
- WO 2013124373 A1
- WO 2013171288 A1
- WO 2016038319 A
- DE 202018102534 U1
- EP 2394970 A1
- EP 1074520 A1